# EUROPÄISCHE PATENTSCHRIFT

(11) **EP 3 803 297 B1**
(45) Veröffentlichungstag und Bekanntmachung des Hinweises auf die Patenterteilung: **21.02.2024**
(21) Anmeldenummer: 19736761.8
(22) Anmeldetag: 11.07.2019
(51) Int. Cl.: G01J 3/46

(54) **VERFAHREN UND SYSTEM ZUM ERMITTELN EINES FARBTONS**
METHOD AND SYSTEM FOR DETERMINING A HUE
PROCÉDÉ ET SYSTÈME DE DÉTERMINATION D'UNE TEINTE

(30) Priorität: 27.07.2018 EP 18186158
(43) Veröffentlichungstag der Anmeldung: 14.04.2021
(73) Patentinhaber: hubergroup Deutschland GmbH, 85551 Kirchheim (DE)
(72) Erfinder: HÜBEL, Patrick, 85586 Poing (DE); CARNELLI, Carlo, 21047 Saronno Va (IT)
(74) Vertreter: Henkel & Partner mbB
(86) Internationale Anmeldenummer: PCT/EP2019/068760
(87) Internationale Veröffentlichungsnummer: WO 2020/020660

(56) Entgegenhaltungen:
- EP-A1- 1 248 087
- EP-A2- 0 527 108
- US-A1- 2006 012 810
- US-A1- 2010 067 056

## Beschreibung

Die vorliegende Erfindung betrifft ein System sowie ein Verfahren zum Ermitteln einer Farbrezeptur, welche nach der Applikation mit einem vorgegebenen Applikationsverfahren, wie z. B. einem Flachdruckverfahren, auf ein vorgegebenes Substrat, wie z. B. Papier, ein Farbprodukt, wie z.B. bedrucktes Papier, mit einem vorgegebenen Farbton ergibt.

Derartige Systeme und Verfahren werden für verschiedenste Anwendungen eingesetzt, wie unter anderem in der Verpackungsentwicklung. Beispielsweise wird bei der Entwicklung einer Verpackung, wie zum Beispiel einer Lebensmittelverpackung, eine neue, farblich anspruchsvolle, mehrere Farben umfassende Gestaltung kreiert, deren exakte Herstellung es erfordert, dass die von dem Verpackungsentwickler vorgegebenen Farben bei dem Bedrucken der Verpackung mit den zur Wiedergabe der verschiedenen Farben eingesetzten Farbrezepturen exakt verwirklicht werden. Allerdings hängt der nach der Applikation einer Farbrezeptur mit einem Applikationsverfahren, also im Falle von Drucken der nach dem Drucken einer Druckfarbe auf ein Substrat erzielte Farbton von einer Vielzahl von Faktoren ab, wie insbesondere von der konkreten Art des Substrats und von dem eingesetzten Applikationsverfahren. Das Drucken einer Druckfarbe mit Flexodruck auf Pappe kann zu einem Druckprodukt mit einem signifikant anderen Farbton führen als beispielsweise das Drucken derselben Druckfarbe mit einem Tiefdruckverfahren auf gestrichenes Papier. Zudem wird eine bekannte, den von dem Verpackungsentwickler geforderten Farbton ergebende Tiefdruckfarbe für Papier auf die gewünschte Verpackungspappe mit einem Tiefdruckverfahren aufgebracht nicht zu dem gewünschten Farbton führen.

Es muss daher eine den gewünschten Farbton ergebende Druckfarbe jeweils für das spezielle Substrat und das gewünschte Druckverfahren gefunden werden, oder, falls noch nicht vorhanden, entwickelt werden.

Neben dem sich nach der Applikation auf das Zielsubstrat mit dem vorgegebenen Applikationsverfahren ergebenden Wunschfarbton muss die für eine neue Anwendung, wie beispielsweise für eine neue Verpackung geeignete Farbrezeptur noch eine Vielzahl anderer Kriterien erfüllen. Je nach Anwendungszweck muss die Farbrezeptur beispielsweise einen vorgegebenen Glanzwert ergeben sowie sich durch eine mehr oder weniger ausgeprägte Chemikalienbeständigkeit oder eine mehr oder weniger ausgeprägte Beständigkeit gegenüber Licht auszeichnen, um nur einige der geforderten Anforderungen zu nennen.

Um es den Verpackungsentwicklern und anderen Anwendern trotz dieser komplexen Zusammenhänge zu erleichtern, für ein konkretes System eine geeignete Farbrezeptur zu finden, sind bereits Datenbanken und Computerprogramme entwickelt worden, die es einem Benutzer erlauben, gewünschte Zielparameter vorzugeben, wie den Zielfarbton, das Substrat, das Applikationsverfahren, mit dem die Farbrezeptur auf das Substrat aufgebracht werden soll, die geforderte Chemikalienbeständigkeit des nach der Applikation der Farbrezeptur auf das Substrat erhaltenen Farbprodukts und andere Parameter. Das Computerprogramm durchsucht dann die Datenbank nach einer geeigneten Farbrezeptur und zeigt diejenige Farbrezeptur an, die gemäß den in der Datenbank gespeicherten Informationen nach dem Aufbringen auf das Zielsubstrat mit dem vorgegebenen Applikationsverfahren ein Farbprodukt mit einem Farbton ergibt, der am nächsten an den geforderten Zielfarbton herankommt. Hierzu enthält die Datenbank eine Vielzahl von Datensätzen, wobei jeder Datensatz Informationen über eine Farbrezeptur, über ein Substrat, über ein Applikationsverfahren und über den Farbton des sich nach der Applikation der in dem Datensatz gespeicherten Farbrezeptur mit dem in dem Datensatz gespeicherten Applikationsverfahren auf das in dem Datensatz gespeicherte Substrat ergebenden Farbprodukts umfasst und ggf. Informationen zu weiteren Parametern, wie beispielsweise zu der Chemikalienbeständigkeit. Falls keine Farbrezeptur gefunden wird, die zumindest annähernd den gewünschten Zielfarbton ergibt, wird dem Benutzer angezeigt, dass kein Treffer gefunden wurde.

Ein solches Verfahren und System wird beispielsweise unter dem Handelsnamen PantoneLIVE vertrieben.

Aus der US 2006/012810 A1 ist ein Verfahren zum Kontrollieren von Metamerie bekannt , bei dem in einer Datenbank zwei Farbrezepturen gefunden werden, welche vorgegebenen Kriterien zumindest nahekommen, bevor die beiden Farbrezepturen elektronisch so optimiert werden, dass Metamerie zwischen einem ersten Farbprodukt und einem zweiten Farbprodukt kontrolliert wird.

In der US 2010/067056 A1 wird ein Verfahren zum Auffinden einer SPOT-Farbe in einer Datenbank beschrieben. Bei diesem Verfahren werde in die Datenbank gewünschte Voll- und Halbtöne eingegeben, woraufhin die Datenbank nach einer Farbrezeptur sucht, welche nach dem Drucken diese Voll- und Halbtöne erfüllt.

Aus der US 7,034,960 B2 ist ein Verfahren zum Verwenden einer Datenbank zum Entwickeln eines Farbprodukts bekannt, wobei das Verfahren die folgenden Schritte umfasst: i) Speichern von Entwicklungsinformationen in der Datenbank, wobei die Entwicklungsinformationen Eigenschaften bezogen auf die Entwicklung einer Vielzahl von Farbprodukten umfassen, ii) Empfangen von ersten Farbinformationen, welche wenigstens eine erste Farbe umfasst, iii) Identifizieren von ersten Entwicklungsinformationen in der Datenbank, wobei die ersten Entwicklungsinformationen wenigstens die erste Farbe umfassen, iv) Empfangen von wenigstens einer physikalischen Eigenschaft des Farbprodukts und v) Verwenden der ersten Entwicklungsinformationen zum Bestimmen, ob die wenigstens eine physikalische Eigenschaft mit der ersten Farbe kompatibel ist. Wenn die wenigstens eine physikalische Eigenschaft nicht mit der ersten Farbe kompatibel ist, wird das Verfahren entweder beendet oder es wird dem Benutzer eine Warnung angezeigt, dass wenigstens eine physikalische Eigenschaft nicht mit der ersten Farbe kompatibel ist. Der Benutzer kann dann seine gewünschte Gestaltung bzw. die Anforderungen an das Farbprodukt ändern, und zwar so oft, bis in der Datenbank ein entsprechender Treffer für eine Farbrezeptur gefunden wird. Letzteres ist jedoch keine befriedigende Lösung, da der Benutzer in diesem Fall nicht eine das von vornherein gewünschte Farbprodukt ergebende Farbrezeptur erhält.

Ein Nachteil der bekannten Verfahren ist es, dass diese Datenbanken verwenden, die vergleichsweise redundant sind, d.h. die eine Vielzahl verschiedener Datensätze für die gleichen oder sehr ähnliche Informationen umfassen. In den bekannten Datenbanken sind etwa 90% solcher redundanten Informationen enthalten. Wenn beispielsweise ein Benutzer einen neuen Datensatz eingibt, der eine Farbrezeptur betrifft, die zu einer bereits in einem anderen Datensatz gespeicherten Farbrezeptur nahezu identisch ist, gar identisch ist oder dieser zumindest sehr ähnlich ist, wird dieser neue Datensatz dennoch gespeichert, selbst wenn dieser Datensatz Informationen über dasselbe Substrat und dasselbe Applikationsverfahren und somit auch über denselben oder nahezu identischen sich für das Farbprodukt ergebenden Farbton umfasst wie der bereits gespeicherte Datensatz. Dabei gilt es zu berücksichtigen, dass das menschliche Auge minimalste Unterschiede zwischen zwei nahezu identischen Farbtönen nicht wahrnehmen kann, so dass zwei nahezu identische Farbtöne, die sich ergeben, wenn sich nur minimal unterscheidende Farbrezepturen mit demselben Applikationsverfahren auf dasselbe Substrat appliziert werden, in der Regel für das menschliche Auge nicht unterscheidbar sind. Die Datenbank enthält dann zwei oder mehr Datensätze, welche Informationen über eine nahezu identische oder sehr ähnliche Farbrezepturen, identische Informationen über das Substrat sowie das Applikationsverfahren und nahezu identische oder sehr ähnliche Informationen über die sich nach Applikation der Farbrezepturen mit dem Applikationsverfahren auf das Substrat jeweils ergebende Farbtöne, die für das menschliche Auge nicht unterscheidbar sind, enthalten. Dieses Vorhandensein einer Vielzahl von Datensätzen, welche nahezu identische oder sehr ähnliche Informationen enthalten, ist jedoch für den Benutzer des Verfahrens nachteilhaft, der eine Vielzahl der in der Datenbank gespeicherten Farbrezepturen für ein oder mehrere Projekte verwenden will. Dies deshalb, weil der Benutzer oder das von dem Benutzer mit der Herstellung der Farbrezepturen beauftragte Unternehmen, wie beispielsweise der Betreiber der Datenbank, für jede der zu verwendenden nahezu identischen oder sehr ähnlichen Farbrezepturen eine eigene Produktionsvorschrift, eine eigene Qualitätskontrollvorschrift und Lagerplatz für die Bestandteile der Farbrezepturen und für die hergestellten Farbrezepturen bereitstellen muss. Ein weiterer Nachteil der redundanten Datensätze ist es, dass die hinsichtlich der Farbrezeptur, des Substrats, des Applikationsverfahrens und des sich nach der Applikation der Farbrezeptur mit dem Applikationsverfahren auf das Substrat ergebenden Farbtons identischen oder nahezu identischen Datensätze hinsichtlich anderer Parameter, wie Chemikalienbeständigkeit oder Temperaturbeständigkeit, beispielsweise aufgrund der Verwendung von verschieden Messverfahren zur Bestimmung dieser Parameter bei den in den verschiedenen Datensätzen enthaltenen Informationen, aufgrund von Rundungsfehlern von in Messungen erhaltenen Zahlenwerten oder aufgrund von Eingabefehler(n) eines Benutzers voneinander abweichen können. Dann widersprechen sich zwei nahezu identische oder gar identische Farbrezepturen betreffende Datensätze hinsichtlich der in den Datensätzen über die Eigenschaften der Farbrezepturen gespeicherten Informationen oder weichen zumindest voneinander ab. Aus all diesen Gründen decken die bekannten Verfahren bezogen auf die Anzahl der darin enthaltenen Datensätze vergleichsweise wenig Varianten der Vielzahl an Varianten aus der aus Farbton, aus Substrat, aus Farbrezeptur und aus Applikationsverfahren bestehenden Matrix ab. Ein weiterer Nachteil der bekannten Verfahren ist es, dass die Datensätze, welche identische oder nahezu identische Farbrezepturen betreffen oder sich für das Farbprodukt ergebende identische oder nahezu identische Farbtöne betreffen, untereinander nicht so verknüpft sind, dass ein Fachmann sich mehrere solche Datensätze anzeigen kann, die auf verschiedene Substrate aufgetragen zu demselben Farbton führen.

Ausgehend davon lag der vorliegenden Erfindung die Aufgabe zugrunde, ein System sowie ein Verfahren zum Ermitteln einer Farbrezeptur bereitzustellen, welches nach der Applikation mit einem vorgegebenen Applikationsverfahren auf ein vorgegebenes Substrat ein Farbprodukt mit einem vorgegebenen Farbton ergibt, und, welches es erlaubt, mit einer möglichst geringen Anzahl von in der Datenbank enthaltenen Datensätzen eine möglichst große Zahl von Varianten der aus Farbton, Substrat, Farbrezeptur und Applikationsverfahren bestehenden Matrix abzudecken. Mit anderen Worten ist es das Ziel der vorliegenden Erfindung, ein entsprechendes System sowie Verfahren zur Verfügung zu stellen, mit dem ein Benutzer eine möglichst hohe Wahrscheinlichkeit dafür hat, dass dieses ihm für ein von ihm vorgegebenes Zielapplikationsverfahren, ein von ihm vorgegebenes Zielsubstrat sowie einen von ihm vorgegebenen Zielfarbton eine geeignete Farbrezeptur anzeigt, mit der er nach der Applikation der Farbrezeptur mit dem vorgegebenen Zielapplikationsverfahren auf das vorgegebene Zielsubstrat ein Farbprodukt mit dem vorgegebenen Zielfarbton erhält, wobei das System sowie Verfahren eine Datenbank nutzt, welche eine möglichst geringe Anzahl an verschiedenen Farbrezepturen enthält.

Erfindungsgemäß wird diese Aufgabe gelöst durch ein Verfahren zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, wobei das Verfahren umfasst:
a) Bereitstellen einer Datenbank, in der eine Vielzahl von Datensätzen gespeichert ist, wobei
   i) zumindest ein Teil und bevorzugt jeder der Datensätze jeweils zumindest Informationen über eine Farbrezeptur, über ein Substrat, über ein Applikationsverfahren und über den Farbton des sich nach der Applikation der in dem Datensatz gespeicherten Farbrezeptur mit dem in dem Datensatz gespeicherten Applikationsverfahren auf das in dem Datensatz gespeicherte Substrat ergebenden Farbprodukts umfasst, wobei die Informationen über die Farbrezeptur einen Farbrezepturidentifikationscode umfassen sowie die Informationen über den Farbton einen Farbtonidentifikationscode umfassen,
   ii) die Datenbank für mindestens einen Farbton jeweils mindestens zwei verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder das Applikationsverfahren von zumindest einem der mindestens zwei verschiedenen Datensätze von dem Substrat und/oder Applikationsverfahren von einem anderen der mindestens zwei verschiedenen Datensätze unterscheidet, wobei für jede der voneinander verschiedenen Farbrezepturen der mindestens zwei verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird, und
   iii) die Datenbank für mindestens eine Farbrezeptur jeweils mindestens zwei verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat und/oder das Applikationsverfahren von zumindest einem der mindestens zwei verschiedenen Datensätze von dem Substrat und/oder Applikationsverfahren eines anderen der mindestens zwei verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von zumindest einem der mindestens zwei verschiedenen Datensätze von dem Farbton des Farbprodukts eines anderen der mindestens zwei verschiedenen Datensätze unterscheidet,
b) Vorgeben eines Zielapplikationsverfahrens, eines Zielsubstrates sowie eines gewünschten, sich nach der Applikation einer Farbrezeptur mit dem vorgegebenen Zielapplikationsverfahren auf das vorgegebene Zielsubstrat für das erhaltene Farbprodukt ergebenden Zielfarbtons durch einen Benutzer,
c) Durchsuchen der Datenbank mit einem Computerprogramm, ob diese mindestens einen Datensatz enthält, dessen Farbrezeptur, über die in dem Datensatz Informationen enthalten sind, nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht, und
d) wenn in dem Schritt c) mindestens ein geeigneter Datensatz gefunden wird, Anzeigen der in dem mindestens einem Datensatz gespeicherten Informationen über die Farbrezeptur,
wobei:
i) in zumindest 90% der Datensätze, in denen Informationen über einen Farbton gespeichert sind, welcher von dem Farbton eines oder mehrerer anderer Datensätze verschieden ist, ein anderer Farbtonidentifikationscode gespeichert ist als in den ein oder mehreren anderen Datensätzen,
ii) in zumindest 90% der Datensätze, in denen Informationen über eine Farbrezeptur gespeichert sind, welche von der Farbrezeptur eines oder mehrerer anderer Datensätze verschieden ist, ein anderer Farbrezepturidentifikationscode gespeichert ist als in den ein oder mehreren anderen Datensätzen,
iii) in zumindest 90% der Datensätze, in denen Informationen über einen Farbton gespeichert sind, welcher gleich zu dem Farbton eines oder mehrerer anderer Datensätze ist, der gleiche Farbtonidentifikationscode gespeichert ist wie in den ein oder mehreren anderen Datensätzen, und
iv) in zumindest 90% der Datensätze, in denen Informationen über eine Farbrezeptur gespeichert sind, welche gleich zu der Farbrezeptur eines oder mehrerer anderer Datensätze ist, der gleiche Farbrezepturidentifikationscode gespeichert ist wie in den ein oder mehreren anderen Datensätzen,

wobei in der Datenbank zwei Farbtöne als gleich bewertet sind, wenn diese voneinander um einen Delta E-Wert von maximal 0,5 abweichen, zwei Farbtöne als verschieden bewertet sind, wenn diese voneinander um einen Delta E-Wert von mehr als 0,5 abweichen, zwei Farbrezepturen als gleich bewertet sind, wenn diese die gleichen farbgebenden Bestandteile aufweisen und bezüglich der Mengen der einzelnen farbgebenden Bestandteile voneinander um maximal 0,5% pro farbgebenden Bestandteil abweichen, und zwei Farbrezepturen als verschieden bewertet sind, wenn diese wenigstens einen verschiedenen farbgebenden Bestandteil aufweisen oder, wenn diese die gleichen farbgebenden Bestandteile aufweisen, bezüglich der Mengen der einzelnen farbgebenden Bestandteile voneinander um mehr als 0,5% pro Bestandteil abweichen, und
wobei das Computerprogramm bei der Anlage eines neuen Datensatzes in die Datenbank durch einen Benutzer automatisch prüft, ob für die Farbrezeptur, über die in dem neu anzulegenden Datensatz Informationen gespeichert werden sollen, bereits mindestens ein Datensatz enthalten ist oder nicht, wobei, falls nicht, der neue Datensatz angelegt wird sowie in diesem ein neu vergebener Farbrezepturidentifikationscode gespeichert, und, falls ja, des Weiteren geprüft wird, ob der mindestens eine Datensatz Informationen über dasselbe Substrat, über dasselbe Applikationsverfahren und über den gleichen sich nach der Applikation der Farbrezeptur mit dem Applikationsverfahren auf das Substrat ergebenden Farbton enthält, wobei, wenn ja, der Benutzer eine Mitteilung erhält, dass in der Datenbank bereits ein entsprechender Datensatz enthalten ist und dann der anzulegende Datensatz nicht angelegt, und, wenn nein, in dem neu anzulegenden Datensatz derselbe Farbrezepturidentifikationscode gespeichert wird.

Unter zwei oder mehr gleichen Farbtönen wird im Sinne der vorliegenden Patentanmeldung verstanden, dass die zwei oder mehr Farbtöne unter dem demselben Licht betrachtet, vorzugsweise unter demselben Normlicht gemäß ISO 3664, oder beispielsweise unter den Messbedingungen M0, M1, M2 oder M3 gemessen, mit dem menschlichen Auge nicht unterscheidbar sind. Insbesondere wird unter zwei oder mehr gleichen Farbtönen verstanden, dass die zwei oder mehr Farbtöne voneinander um einen Delta E-Wert (der den Gesamtfarbabstand wiedergibt) von nicht mehr als 0,5, bevorzugt um einen ΔE₀₀-Wert von nicht mehr als 0,5 und vorzugsweise um einen dH* (der den Farbwinkelabstand wiedergibt) von maximal 0,5, besonders bevorzugt einen dH* von maximal 0,2 abweichen. Die Parameter ΔE und dH* sind in der DIN EN ISO 11664-6:2014 definiert.

Analog dazu werden unter zwei oder mehr gleichen Farbrezepturen im Sinne der vorliegenden Patentanmeldung Farbrezepturen verstanden, welche die gleichen farbgebenden Bestandteile aufweisen und bezüglich der Mengen der einzelnen farbgebenden Bestandteile voneinander um maximal 0,5% pro farbgebenden Bestandteil abweichen. Mithin werden gemäß der vorliegenden Patentanmeldung zwei oder mehr Farbrezepturen als verschieden betrachtet, wenn diese wenigstens einen verschiedenen farbgebenden Bestandteil aufweisen oder, wenn diese die gleichen farbgebenden Bestandteile aufweisen, bezüglich der Mengen der einzelnen farbgebenden Bestandteile voneinander um mehr als 0,5% pro Bestandteil abweichen. Unter Bestandteil wird dabei eine Einzelkomponente (also ein Rohstoff) der Farbrezeptur oder ein in der Farbrezeptur enthaltendes Halbfertigprodukt oder ein in der Farbrezeptur enthaltendes Fertigprodukt verstanden. Ferner wird unter einem farbgebenden Bestandteil ein Bestandteil verstanden, dessen Zusatz den Farbton der Farbrezeptur verändert. Hingegen werden Bestandteile, deren Zusatz den Farbton der Farbrezeptur nicht verändern, als farbneutral bezeichnet.

Indem die erfindungsgemäß eingesetzte Datenbank verschiedene, jeweils die gleiche Farbrezeptur betreffende Datensätze umfasst, für die jeweils nach dem Applizieren der in den Datensätzen gespeicherten gleichen Farbrezeptur mit den in den jeweiligen Datensätzen gespeicherten Applikationsverfahren auf die in den jeweiligen Datensätzen gespeicherten Substrat Farbprodukte mit einem jeweils verschiedenen Farbton erhalten werden, und jeder dieser Datensätze jeweils den gleichen Farbrezepturidentifikationscode, beispielsweise ein Code aus Zahlen und/oder Buchstaben, enthält, kann es zuverlässig verhindert werden, dass die Datenbank unnötig redundante Datensätze enthält, d.h. eine Vielzahl verschiedener Datensätze für die gleichen oder für sehr ähnliche Informationen. Wenn nämlich ein Benutzer einen neuen Datensatz anlegt, muss die Datenbank einen Farbrezepturidentifikationscode vergeben. In diesem Zusammenhang prüft der Benutzer oder vorzugsweise das die Dateneingabe in die Datenbank betreibende Computerprogramm automatisch, ob für die Farbrezeptur, über die in dem neu anzulegenden Datensatz Informationen gespeichert werden sollen, bereits innerhalb des vorgenannten Toleranzbereiches (d.h. die gleichen farbgebenden Bestandteile aufweisend und bezüglich der Mengen der einzelnen farbgebenden Bestandteile um maximal 0,5% pro Bestandteil abweichend) mindestens ein Datensatz enthalten ist oder nicht. Falls nein, wird der neue Datensatz angelegt und in diesem ein neu vergebener Farbrezepturidentifikationscode gespeichert. Falls ja, wird des Weiteren geprüft, ob der mindestens eine Datensatz Informationen über dasselbe Substrat, über dasselbe Applikationsverfahren und über den gleichen sich nach der Applikation der Farbrezeptur mit dem Applikationsverfahren auf das Substrat ergebenden Farbton enthält. Wenn ja, erhält der Benutzer eine Mitteilung, dass in der Datenbank bereits ein entsprechender Datensatz enthalten ist und, je nach Ausführungsform, wird dann der anzulegende Datensatz nicht angelegt oder nur, wenn der Benutzer bestätigt, dass er dennoch angelegt werden soll. Wenn nein, also falls in der Datenbank mindestens ein Datensatz für die Farbrezeptur gefunden wurde, dieser aber nicht Informationen über dasselbe Substrat, über dasselbe Applikationsverfahren und über den gleichen Farbton enthält, werden in dem neu anzulegenden Datensatz derselbe Farbrezepturidentifikationscode, also dieselben Informationen über die Farbrezeptur, gespeichert wie in dem wenigstens einen bereits gespeicherten Datensatz sowie auch dieselben unmittelbar mit der Farbrezeptur verbundenen Parameter. Beispielsweise hängt die UV-Beständigkeit, Temperaturbeständigkeit oder Chemikalienbeständigkeit der Farbrezeptur nur von der Farbrezeptur selbst ab. Daher werden in allen Datensätzen, die denselben Farbrezepturidentifikationscode aufweisen, für die unmittelbar mit der Farbrezeptur verbundenen Parameter dieselben Informationen gespeichert. Dies kann beispielsweise einfach dadurch geschehen, dass diese Datensätze für diese Parameter auf eine diese Farbrezeptur betreffende Tabelle zugreifen, in der alle Informationen über die unmittelbar mit der Farbrezeptur verbundenen Parameter gespeichert sind. Auf diese Weise wird nicht nur sichergestellt, dass die Datenbank nicht zwei oder mehr Datensätze enthält, welche Informationen über nahezu identische oder sehr ähnliche Farbrezepturen, identische Informationen über das Substrat sowie das Applikationsverfahren und nahezu identische oder sehr ähnliche Informationen über die sich nach Applikation der Farbrezepturen mit dem Applikationsverfahren auf das Substrat jeweils ergebende Farbtöne, die für das menschliche Auge nicht unterscheidbar sind, enthalten. Zudem wird dadurch zuverlässig vermieden, dass die dieselbe Farbrezeptur betreffenden Datensätze hinsichtlich der über die unmittelbar mit der Farbrezeptur verbundenen Parameter, wie Chemikalienbeständigkeit oder Temperaturbeständigkeit der Farbrezeptur, unterschiedliche Informationen enthalten. So wird nicht nur eine hohe Datenqualität sichergestellt, sondern insbesondere auch erreicht, dass derjenige Benutzer des Verfahrens, der eine Vielzahl der in der Datenbank gespeicherten Farbrezepturen für ein oder mehrere Projekte verwenden will, mit einer vergleichsweise geringen Anzahl von verschiedenen Farbrezepturen auskommt. Dies ist deshalb vorteilhaft, weil der Benutzer oder das von dem Benutzer mit der Herstellung der Farbrezepturen beauftragte Unternehmen für jede der zu verwendenden nahezu identischen oder sehr ähnlichen Farbrezepturen, welche erfindungsgemäß durch eine Farbrezeptur ersetzt werden, jeweils eine eigene Produktionsvorschrift, eine eigene Qualitätskontrollvorschrift und Lagerplatz für die Bestandteile der Farbrezepturen und für die hergestellten Farbrezepturen bereitstellen müsste. Aus all diesen Gründen deckt das erfindungsgemäße Verfahren bezogen auf die Anzahl der darin enthaltenen Datensätze eine sehr große Anzahl an Varianten aus der aus Farbton, aus Substrat, aus Farbrezeptur und aus Applikationsverfahren bestehenden Matrix ab.

Ein weiterer Vorteil des erfindungsgemäßen Verfahren ist es, dass durch die Vergabe von gleichen Farbtonidentifikationscodes für Datensätze, welche zu Farbprodukten mit innerhalb des Toleranzbereichs liegend gleichen Farbtönen führen, sowie durch die Vergabe von gleichen Farbrezepturidentifikationscodes für Datensätze, welche innerhalb des Toleranzbereichs liegend gleiche Farbrezepturen betreffen, sowohl diejenigen Datensätze untereinander verknüpft sind, welche identische oder nahezu identische Farbrezepturen betreffen, als auch diejenigen Datensätze untereinander verknüpft sind, welche Farbprodukte mit identischen oder nahezu identischen Farbtönen ergeben. Dies hat den Vorteil, dass sich ein Benutzer, der für eines seiner Produkte für alle von ihm vertriebenen Verpackungen unabhängig von dem eingesetzten Substrat denselben Farbton, wie beispielsweise einen speziellen Blauton realisieren will, alle Datensätze anzeigen lassen kann, welche diesen Farbton ergeben. So kann er eine Farbrezeptur ermitteln, mit der er diesen speziellen Blauton auf Metall erzielen kann, eine Farbrezeptur ermitteln, mit der er diesen speziellen Blauton auf einer Lebensmittelverpackungspappe erzielen kann und/oder eine Farbrezeptur ermitteln, mit der er diesen speziellen Blauton auf einer Polypropylenfolie erzielen kann. Ohne die Vergabe jeweils desselben Farbtonidentifikationscodes für Datensätze, welche zu innerhalb des Toleranzbereichs liegend gleichen Farbtönen führen, wäre dies nicht möglich, da der Benutzer in dem Computerprogramm dann nur nach einem ganz speziellen Lab-Werten entsprechenden Farbton betreffenden Datensätzen suchen könnte, nicht aber nach allen Datensätzen, die einen Farbton ergeben, der mit dem menschlichen Auge nicht von dem Zielfarbton unterscheidbar ist. Gleichermaßen kann sich der Benutzer mit dem erfindungsgemäßen Verfahren durch die Vergabe von gleichen Farbrezepturidentifikationscodes für Datensätze, welche innerhalb des Toleranzbereichs liegend gleiche Farbrezepturen betreffen, alle eine innerhalb eines Toleranzbereichs liegend gleiche Farbrezeptur betreffenden Datensätze anzeigen lassen und kann so mit wenig Aufwand ermitteln, für wie viele verschiedener seiner Projekte er eine bestimmte Farbrezeptur einsetzen kann. Dies gibt dem Benutzer eine bessere Entscheidungsbasis darüber, ob es sich für ihn lohnt, größere Mengen dieser Farbrezeptur in einer Produktionscharge herzustellen, ohne dass die Lagerzeit bis zum endgültigen Verbrauch der Produktionscharge unwirtschaftlich lang wird.

Indem in zumindest 90% der Datensätze, in denen Informationen über einen Farbton gespeichert sind, welcher von dem Farbton eines oder mehrerer anderer Datensätze verschieden ist, ein anderer Farbtonidentifikationscode gespeichert ist als in den ein oder mehreren anderen Datensätzen, und/oder in zumindest 90% der Datensätze, in denen Informationen über eine Farbrezeptur gespeichert sind, welche von der Farbrezeptur eines oder mehrerer anderer Datensätze verschieden ist, ein anderer Farbrezepturidentifikationscode gespeichert ist als in den ein oder mehreren anderen Datensätzen, wird eine unnötige Redundanz der Datenbank vermieden. Bevorzugt sind in zumindest 90% der Datensätze, in denen Informationen über einen Farbton gespeichert sind, welcher von dem Farbton eines oder mehrerer anderer Datensätze verschieden ist, ein anderer Farbtonidentifikationscode gespeichert als in den ein oder mehreren anderen Datensätzen, und sind in zumindest 90% der Datensätze, in denen Informationen über eine Farbrezeptur gespeichert sind, welche von der Farbrezeptur eines oder mehrerer anderer Datensätze verschieden ist, ein anderer Farbrezepturidentifikationscode gespeichert als in den ein oder mehreren anderen Datensätzen.

Erfindungsgemäß umfasst zumindest ein Teil der Datensätze jeweils zumindest Informationen über eine Farbrezeptur, über ein Substrat, über ein Applikationsverfahren und über den Farbton des sich nach der Applikation der in dem Datensatz gespeicherten Farbrezeptur mit dem in dem Datensatz gespeicherten Applikationsverfahren auf das in dem Datensatz gespeicherte Substrat ergebenden Farbprodukts. Bevorzugt umfassen wenigstens 50%, weiter bevorzugt wenigstens 70%, besonders bevorzugt wenigstens 80%, weiter bevorzugt wenigstens 90%, ganz besonders bevorzugt wenigstens 95% und höchst bevorzugt jeder der Datensätze jeweils zumindest Informationen über eine Farbrezeptur, über ein Substrat, über ein Applikationsverfahren und über den Farbton des sich nach der Applikation der in dem Datensatz gespeicherten Farbrezeptur mit dem in dem Datensatz gespeicherten Applikationsverfahren auf das in dem Datensatz gespeicherte Substrat ergebenden Farbprodukts umfasst, wobei die Informationen über die Farbrezeptur einen Farbrezepturidentifikationscode umfassen sowie die Informationen über den Farbton einen Farbtonidentifikationscode umfassen.

Erfindungsgemäß umfasst die Datenbank für mindestens einen Farbton jeweils mindestens zwei verschiedene Datensätze, wobei unter zwei oder mehr gleichen Farbtönen verstanden wird, dass die zwei oder mehr Farbtöne unter dem demselben Licht betrachtet, vorzugsweise unter demselben Normlicht gemäß ISO 3664 oder beispielsweise unter den Messbedingungen M0, M1, M2 oder M3 gemessen, mit dem menschlichen Auge nicht unterscheidbar sind und insbesondere voneinander um einen Delta E-Wert von nicht mehr als 0,5 abweichen. Als Delta E-Werte können alle gängigen Delta E-Werte eingesetzt werden, wie beispielsweise der ΔE*_{ab}, der ΔE94, der ΔE₀₀, der DIN99, der DIN99ₒ, der CMC, der Lübbe, der Lübbe korrigiert, der CIECAM02. Vorzugsweise wird der ΔE₀₀ eingesetzt. Grundsätzlich gilt, dass zwei verschiedene Farbtöne mit einer Abweichung des ΔE₀₀-Wertes von bis zu 1 einer sehr kleinen Farbtonabweichung entspricht, die nur von einem geschulten Auge erkennbar ist. Abweichungen in dem ΔE₀₀-Wert von bis zu 0,5 gelten als normalerweise nicht sichtbar und Abweichungen in dem ΔE₀₀-Wert von bis zu 0,2 sind auch von einem geschulten Auge nicht mehr erkennbar.

Bevorzugt umfasst die Datenbank für mindestens einen Farbton jeweils mindestens zwei verschiedene Datensätze, wobei unter zwei oder mehr gleichen Farbtönen verstanden wird, dass die zwei oder mehr Farbtöne unter dem demselben Licht betrachtet, vorzugsweise unter demselben Normlicht gemäß ISO 3664 oder beispielsweise unter den Messbedingungen M0, M1, M2 oder M3 gemessen, voneinander um einen ΔE₀₀-Wert von nicht mehr als 0,5 und besonders bevorzugt voneinander um einen ΔE₀₀-Wert von nicht mehr als 0,2 abweichen. Hingegen werden zwei Farbtöne als verschieden voneinander bewertet, wenn diese voneinander um einen Delta E-Wert von mehr als 0,5 abweichen und bevorzugt um einen ΔE₀₀-Wert von mehr als 0,5 abweichen. Vorzugsweise weichen die zwei oder mehr Farbtöne unter dem demselben Licht betrachtet um einen dH* von maximal 0,5 und besonders bevorzugt um einen dH* von maximal 0,2 ab.

Um die Vorteile der vorliegenden Erfindung besonders gut zu nutzen, wird es in Weiterbildung des Erfindungsgedankens vorgeschlagen, dass die Datenbank für wenigstens 10%, bevorzugt für wenigstens 20%, besonders bevorzugt für wenigstens 50%, weiter bevorzugt für wenigstens 70%, ganz besonders bevorzugt für wenigstens 90% und höchst bevorzugt für alle Farbtöne jeweils mindestens zwei verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von jedem der mindestens zwei verschiedenen Datensätze von dem Substrat und/oder Applikationsverfahren von jedem anderen der mindestens zwei verschiedenen Datensätze unterscheidet, wobei für jede der voneinander verschiedenen Farbrezepturen der mindestens zwei verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird.

Bei der vorstehend beschriebenen Ausführungsform ist es insbesondere bevorzugt, dass die Datenbank für den mindestens einen Farbton jeweils mindestens zwei verschiedene, bevorzugt mindestens sechs verschiedene, besonders bevorzugt mindestens zehn verschiedene und ganz besonders bevorzugt mindestens zwanzig verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von jedem der mindestens vier verschiedenen Datensätze von dem Substrat und/oder Applikationsverfahren von jedem anderen der mindestens vier verschiedenen Datensätze unterscheidet, wobei für jede der voneinander verschiedenen Farbrezepturen der mindestens vier verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird.

Dabei ist es bevorzugt vorgesehen, dass in zumindest 95%, bevorzugt in zumindest 97%, besonders bevorzugt in zumindest 99% und höchst bevorzugt in allen der Datensätze, in denen Informationen über einen Farbton gespeichert sind, welcher von dem Farbton eines oder mehrerer anderer Datensätze verschieden ist, ein anderer Farbtonidentifikationscode gespeichert ist als in den ein oder mehreren anderen Datensätzen. Mithin ist es höchst bevorzugt, dass jeder Datensatz, für welchen nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat ein Farbprodukt mit einem von dem für mindestens einen anderen Datensatz erhaltenen verschiedenen Farbton erhalten wird, ein anderer Farbtonidentifikationscode gespeichert ist als in allen anderen des mindestens einen anderen Datensatzes. In diesem Zusammenhang werden unter zwei oder mehr verschiedenen Farbtönen wiederum Farbtöne verstanden, welche - unter demselben Licht betrachtet, und zwar vorzugsweise unter demselben Normlicht betrachtet, wie beispielsweise unter dem Normlicht gemäß ISO 3664 oder beispielsweise unter den Messbedingungen M0, M1, M2 oder M3 gemessen - voneinander um einen Delta E-Wert von mehr als 0,5 abweichen und bevorzugt um einen ΔE₀₀-Wert von mehr als 0,5 abweichen.

Erfindungsgemäß ist in zumindest 90%, bevorzugt in zumindest 95%, weiter bevorzugt in zumindest 97%, besonders bevorzugt in zumindest 99% und höchst bevorzugt in allen der Datensätze, in denen Informationen über einen Farbton gespeichert sind, welcher innerhalb des Toleranzbereichs liegend gleich zu dem Farbton eines oder mehrerer anderer Datensätze ist, der gleiche Farbtonidentifikationscode gespeichert wie in den ein oder mehreren anderen Datensätzen.

Bei dem in jedem der Datensätze gespeicherten Farbtonidentifikationscode kann es sich insbesondere um einen Zahlen- und/oder Buchstabencode oder um einen Text handeln.

Bei den in den Datensätzen gespeicherten Informationen über den Farbton kann es sich um jede Art von Information handeln welche es erlaubt, den Farbton zu charakterisieren und von anderen Farbtönen zu unterscheiden. Gemäß einer besonders bevorzugten Ausführungsform der vorliegenden Erfindung handelt es sich bei den Informationen über den Farbton um die Daten einer Spektralkurve, die erhalten worden ist, indem die in dem jeweiligen Datensatz gespeicherte Farbrezeptur mit dem in dem jeweiligen Datensatz gespeicherten Applikationsverfahren auf das in dem jeweiligen Datensatz gespeicherte Substrat appliziert worden ist und dann von der Oberfläche des so erhaltenen Farbprodukts mit einem Spektrophotometer über einen Wellenlängenbereich von 180 bis 4.000 nm eine Spektralkurve aufgenommen worden ist. Bei der aufgenommenen Spektralkurve handelt es sich besonders bevorzugt um eine über einen Wellenlängenbereich von 400 bis 700 nm aufgenommene spektrale Reflexionskurve. Dabei kann die spektrale Reflexionskurve so aufgenommen werden, dass die Gesamtreflexion, die Totalreflexion, die diffuse Reflexion oder die gerichtete Reflexion gemessen wird. Vorzugsweise wird das Lichtspektrum in einem ersten Winkel auf das zu vermessende Farbprodukt aufgestrahlt und die Reflexion mit einem Sensor unter einem zweiten Winkel gemessen. Beispielsweise kann die Lichtquelle das Lichtspektrum in einem Winkel von 45° auf das Farbprodukt einstrahlen und der Sensor die Reflexion bei 0° messen, wobei beide Winkel in Bezug auf die Vertikale, d.h. die zu der Farbproduktoberfläche senkrechte Ebene, gemeint sind, also 0° der Vertikalen entspricht. Alternativ dazu kann die Lichtquelle das Lichtspektrum in einem Winkel von 0° auf das Farbprodukt einstrahlen und der Sensor die Reflexion bei 45° messen oder kann die Lichtquelle das Lichtspektrum diffus auf das Farbprodukt einstrahlen und der Sensor die Reflexion bei 0°, 8° oder irgendeinem anderen Winkel messen. Die Daten der Spektralkurve können bei dieser Ausführungsform der vorliegenden Erfindung die Reflexionswerte für jeden Nanometer in dem gemessenen Wellenlängenbereich sein, die Reflexionswerte für jeden fünften Nanometer in dem gemessenen Wellenlängenbereich sein, die Reflexionswerte für jeden zehnten Nanometer in dem gemessenen Wellenlängenbereich sein oder die Reflexionswerte in anderen Abständen.

Gemäß einer dazu alternativen Ausführungsform der vorliegenden Erfindung kann es sich bei den Informationen über den Farbton auch um die Werte in einem Farbraum handeln, welche dem Farbton entsprechen. Vorzugsweise sind die Informationen über den Farbton gemäß dieser Ausführungsform die Lab-Werte des Farbtons. Alternativ dazu können auch die Werte aus anderen Farbräumen verwendet werden, wie LUV-Werte, RGB-Werte, LCh-Werte, XYZ-Werte oder dergleichen.

Die vorstehenden Ausführungen zu den in den Datensätzen der Datenbank gespeicherten Informationen über den Farbton gelten für den in dem Schritt b) des erfindungsgemäßen Verfahrens einzugebenden Zielfarbton gleichermaßen. Mithin kann es sich bei dem in dem Schritt b) von dem Benutzer vorzugebenden Zielfarbton jeweils um die Daten einer über einen Wellenlängenbereich von 180 bis 4.000 nm und bevorzugt über einen Wellenlängenbereich von 400 bis 700 nm aufgenommenen Spektralkurve, wie insbesondere einer spektralen Reflexionskurve, um die Lab-Werte des Farbtons oder dergleichen handeln.

Erfindungsgemäß sind in der Datenbank zwei Farbrezepturen als gleich bewertet, wenn diese die gleichen farbgebenden Bestandteile aufweisen und bezüglich der Mengen der einzelnen farbgebenden Bestandteile voneinander um maximal 0,5% pro farbgebenden Bestandteil abweichen. Hingegen sind zwei oder mehr Farbrezepturen als voneinander verschieden bewertet, wenn diese wenigstens einen verschiedenen farbgebenden Bestandteil aufweisen oder, wenn diese die gleichen farbgebenden Bestandteile aufweisen, bezüglich der Mengen der einzelnen farbgebenden Bestandteile voneinander um mehr als 0,5% pro Bestandteil abweichen.

Um eine - bezogen auf die Anzahl der darin enthaltenen Datensätze - Abdeckung einer besonders großen Anzahl an Varianten aus der aus Farbton, aus Substrat, aus Farbrezeptur und aus Applikationsverfahren bestehenden Matrix zu erreichen, wird es in Weiterbildung des Erfindungsgedankens vorgeschlagen, dass die Datenbank für wenigstens 10%, weiter bevorzugt für wenigstens 20%, besonders bevorzugt für wenigstens 50%, weiter bevorzugt für wenigstens 70%, ganz besonders bevorzugt für wenigstens 90% und höchst bevorzugt für alle Farbrezepturen jeweils mindestens zwei verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat und/oder das Applikationsverfahren von jedem der mindestens zwei verschiedenen Datensätze von dem Substrat und/oder Applikationsverfahren von jedem anderen der mindestens zwei verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von jedem der mindestens zwei verschiedenen Datensätze von dem Farbton der Farbprodukte aller anderen der mindestens zwei verschiedenen Datensätze unterscheidet.

Bei dieser Ausführungsform ist es besonders bevorzugt, dass die Datenbank für die mindestens eine Farbrezeptur jeweils mindestens zwei verschiedene, bevorzugt mindestens sechs verschiedene, besonders bevorzugt mindestens zehn verschiedene und ganz besonders bevorzugt mindestens zwanzig verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat und/oder das Applikationsverfahren von jedem der mindestens vier verschiedenen Datensätze von dem Substrat und/oder Applikationsverfahren von jedem anderen der mindestens vier verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von jedem der mindestens vier verschiedenen Datensätze von dem Farbton der Farbprodukte aller anderen der mindestens vier verschiedenen Datensätze unterscheidet.

Um eine hohe Datenqualität zu erreichen, ist es erfindungsgemäß vorgesehen, dass in zumindest 90%, bevorzugt in zumindest 97%, besonders bevorzugt in zumindest 99% und höchst bevorzugt in allen der Datensätze, in denen Informationen über eine Farbrezeptur gespeichert sind, welche von der Farbrezeptur eines oder mehrerer anderer Datensätze verschieden ist, ein anderer Farbrezepturidentifikationscode gespeichert als in den ein oder mehreren anderen Datensätzen.

Erfindungsgemäß ist in zumindest 90%, bevorzugt in zumindest 95%, weiter bevorzugt in zumindest 97%, besonders bevorzugt in zumindest 99% und höchst bevorzugt in allen der Datensätze, in denen Informationen über eine Farbrezeptur gespeichert sind, welche innerhalb des Toleranzbereichs liegend gleich zu der Farbrezeptur eines oder mehrerer anderer
Datensätze ist, der gleiche Farbrezepturidentifikationscode gespeichert wie in den ein oder mehreren anderen Datensätzen.

Gemäß einer ganz besonders bevorzugten Ausführungsform der vorliegenden Erfindung ist es vorgesehen, dass in zumindest 99% und höchst bevorzugt in allen der Datensätze, in denen Informationen über einen Farbton gespeichert sind, welcher von dem Farbton eines oder mehrerer anderer Datensätze verschieden ist, ein anderer Farbtonidentifikationscode gespeichert ist als in den ein oder mehreren anderen Datensätzen, zudem in zumindest 99% und höchst bevorzugt in allen der Datensätze, in denen Informationen über eine Farbrezeptur gespeichert sind, welche von der Farbrezeptur eines oder mehrerer anderer Datensätze verschieden ist, ein anderer Farbrezepturidentifikationscode gespeichert ist als in den ein oder mehreren anderen Datensätzen, ferner in 99% und höchst bevorzugt in allen der Datensätze, in denen Informationen über einen Farbton gespeichert sind, welcher innerhalb des Toleranzbereichs liegend gleich zu dem Farbton eines oder mehrerer anderer Datensätze ist, der gleiche Farbtonidentifikationscode gespeichert ist wie in den ein oder mehreren anderen Datensätzen, und schließlich in 99% und höchst bevorzugt in allen der Datensätze, in denen Informationen über eine Farbrezeptur gespeichert sind, welche innerhalb des Toleranzbereichs liegend gleich zu der Farbrezeptur eines oder mehrerer anderer Datensätze ist, der gleiche Farbrezepturidentifikationscode gespeichert ist wie in den ein oder mehreren anderen Datensätzen.

Bei dem in jedem der Datensätze gespeicherten Farbrezepturidentifikationscode kann es sich insbesondere um einen Zahlen- und/oder Buchstabencode oder um einen Text handeln.

Um in der Datenbank eine hohe Datenqualität im Hinblick darauf zu erreichen, dass in jedem die gleiche Farbrezeptur oder zumindest die nahezu gleiche Farbrezeptur betreffenden Datensatz der Datenbank für die unmittelbar mit der Farbrezeptur verbundenen Parameter dieselben Informationen gespeichert sind, wird es in Weiterbildung des Erfindungsgedankens vorgeschlagen, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der mindestens zwei verschiedenen Datensätze, in denen jeweils derselbe Farbrezepturidentifikationscode gespeichert ist, auch Informationen für mindestens einen weiteren Parameter enthalten, wobei diese Informationen über den mindestens einen weiteren Parameter für die Farbrezeptur charakteristisch sind und in allen der mindestens zwei verschiedenen Datensätze identisch sind. Dies kann beispielsweise einfach dadurch geschehen, dass diese Datensätze für diese Parameter auf eine diese Farbrezeptur betreffende Tabelle zugreifen, in der alle Informationen über die unmittelbar mit der Farbrezeptur verbundenen Parameter gespeichert sind. Auf diese Weise wird nicht nur sichergestellt, dass die Datenbank nicht zwei oder mehr Datensätze enthält, welche Informationen über nahezu identische oder sehr ähnliche Farbrezepturen, identische Informationen über das Substrat sowie das Applikationsverfahren und identische oder nahezu identische Informationen über die sich nach Applikation der Farbrezepturen mit dem Applikationsverfahren auf das Substrat jeweils ergebenden Farbtöne, die für das menschliche Auge nicht unterscheidbar sind, enthalten. Zudem wird dadurch zuverlässig vermieden, dass die dieselbe Farbrezeptur betreffenden Datensätze hinsichtlich der über die unmittelbar mit der Farbrezeptur verbundenen Parameter (also für diejenigen Parameter, welche für die Farbrezeptur charakteristisch sind), wie Chemikalienbeständigkeit oder Temperaturbeständigkeit der Farbrezeptur, unterschiedliche Informationen enthalten.

Beispiele für geeignete, unmittelbar mit der Farbrezeptur verbundene Parameter im Sinne der vorstehend beschriebenen Ausführungsform sind solche, welche aus der Gruppe ausgewählt sind, die aus Beständigkeit der Farbrezeptur gegenüber Licht, gegenüber Temperatur, gegenüber gamma-Strahlen, gegenüber Chemikalien, gegenüber Pasteurisation, gegenüber Sterilisation, gegenüber Feuchtigkeit und beliebigen Kombinationen von zwei oder mehr der vorgenannten besteht.

Um die hohe Datenqualität der Datenbank beizubehalten, ist es gemäß einer weiteren besonders bevorzugten Ausführungsform der vorliegenden Erfindung vorgesehen, dass bei der Anlage eines neuen Datensatzes in die Datenbank der Benutzer und bevorzugt das die Dateneingabe in die Datenbank betreibende Computerprogramm automatisch prüft, ob für die Farbrezeptur, über die in dem neu anzulegenden Datensatz Informationen gespeichert werden sollen, bereits innerhalb des vorgenannten Toleranzbereiches mindestens ein Datensatz enthalten ist oder nicht, wobei, falls nicht, der neue Datensatz angelegt wird sowie in diesem ein neu vergebener Farbrezepturidentifikationscode gespeichert, und, falls ja, des Weiteren geprüft wird, ob der mindestens eine Datensatz Informationen über dasselbe Substrat, über dasselbe Applikationsverfahren und über den gleichen sich nach der Applikation der Farbrezeptur mit dem Applikationsverfahren auf das Substrat ergebenden Farbton enthält, wobei, wenn ja, der Benutzer eine Mitteilung erhält, dass in der Datenbank bereits ein entsprechender Datensatz enthalten ist und dann der anzulegende Datensatz nicht angelegt oder nur, wenn der Benutzer bestätigt, dass er dennoch angelegt werden soll, und, wenn nein, in dem neu anzulegenden Datensatz derselbe Farbrezepturidentifikationscode gespeichert wird.

Unter in den Datensätzen gespeicherten Informationen über die Farbrezeptur werden im Sinne der vorliegenden Erfindung alle Arten von Informationen verstanden, welche die Farbrezeptur eindeutig charakterisieren. Beispielsweise können diese Informationen die Angabe aller in der Farbrezeptur enthaltenen Einzelkomponenten bzw. Rohstoffe sowie deren Mengen umfassen. Allerdings ist es auch möglich, die Farbrezeptur als Mischung aus Halbfertigprodukten anzugeben, wie einer Mischung aus einem oder mehreren Verschnitten und einem oder mehreren Farbmitteln. Ferner ist es auch möglich, die Farbrezeptur als Mischung aus Fertigprodukten anzugeben, wie einer Mischung aus zwei oder mehr Farben. In diesen Fällen umfassen die Informationen die Angabe aller in der Farbrezeptur enthaltenen Einzelkomponenten bzw. Rohstoffe sowie deren Mengen, die Angabe aller in der Farbrezeptur enthaltenen Halbfertigprodukte sowie deren Mengen bzw. die Angabe aller in der Farbrezeptur enthaltenen Fertigprodukte sowie deren Mengen. Zudem ist es auch möglich, die Farbrezeptur als Mischung aus Einzelkomponenten bzw. Rohstoffen und Halbfertigprodukten, als Mischung aus Einzelkomponenten bzw. Rohstoffen und Fertigprodukten, als Mischung aus Halbfertigprodukten und Fertigprodukten oder als Mischung aus Einzelkomponenten bzw. Rohstoffen, Halbfertigprodukten und Fertigprodukten anzugeben. Schließlich ist es auch möglich, die Farbrezeptur anhand eines Handelsnamens oder eines Codes aus Buchstaben- und/oder Zahlenkombinationen zu spezifizieren.

Gemäß einer besonders bevorzugten Ausführungsform der vorliegenden Erfindung ist es vorgesehen, dass wenigstens eine, bevorzugt wenigstens 10%, besonders bevorzugt wenigstens 50%, weiter bevorzugt wenigstens 80%, ganz besonders bevorzugt wenigstens 90% und höchst bevorzugt alle der Farbrezepturen, über die in den Datensätzen der Datenbank Informationen enthalten sind, aus Halbfertigprodukten, nämlich bevorzugt aus wenigstens einem Farbmittel und wenigstens einem nicht-färbenden Verschnitt zusammengesetzt sind. Besonders bevorzugt sind diese aus zwei bis fünfzehn und besonders bevorzugt aus zwei bis zehn Halbfertigprodukten zusammengesetzt. Beispielsweise ist es bevorzugt, dass diese aus zwei bis vier Farbmitteln und einem nicht-färbenden Verschnitt zusammengesetzt sind. Beispielsweise können zu diesen färbenden und nichtfärbenden Komponenten weitere Halbfertigprodukte oder Rohstoffe, wie Lösemittel oder Lösemittelgemische, Additive, wie z.B. Slip-, Wachsadditive oder Entschäumer, Haftvermittler, Photoinitiatoren, Stabilisatoren, Trockenstoffe, Härter oder ähnliches hinzukommen. Die in den Datensätzen gespeicherten Informationen über die Farbrezeptur umfassen bei dieser Ausführungsform die Angabe aller in der Farbrezeptur enthaltenen Halbfertigprodukte sowie deren Mengen. Dabei kann der nicht-färbende Verschnitt wenigstens eine Komponente enthalten, welche aus der Gruppe ausgewählt ist, welche aus Bindemitteln, Lösungsmitteln, Wachsen, Additiven, Reaktivverdünnern, Fotoinitiatoren, Härtern und beliebigen Kombinationen von zwei oder mehr dieser Verbindungen besteht. Bei dem wenigstens einen Farbmittel handelt es sich bevorzugt um eine Pigmentformulierung in fester, flüssiger oder pastöser Form oder um eine einen oder mehrere Farbstoffe enthaltende Formulierung, in der ein Pigment oder eine Mischung aus zwei oder mehr Pigmenten, oder ein Farbstoff oder eine Mischung aus mehreren Farbstoffen in Lösungsmittel, Bindemittel oder einer Mischung aus Lösungsmittel und Bindemittel dispergiert ist. Das Farbmittel kann beispielsweise wenigstens ein Effektpigment enthalten, welches bevorzugt aus der Gruppe ausgewählt ist, die aus Metalleffektpigmenten, Perlglanzpigmenten, mit Metalloxid beschichtetem Glimmer, Interferenzpigmenten, Lumineszenzpigmenten, UV-absorbierenden Pigmenten, IR-absorbierenden Pigmenten, photochromen Pigmenten, thermochromen Pigmenten, piezo-elektronischen Pigmenten, magnetischen Pigmenten und beliebigen Kombinationen von zwei oder mehr der vorstehenden Pigmenttypen besteht. Alternativ dazu können oder auch zusätzlich dazu können auch Nichteffektpigmente, wie Buntpigmente, Weißpigmente, Schwarzpigmente oder Farbstoffe eingesetzt werden. Vorzugsweise enthält das wenigstens eine Farbmittel zusätzlich ein oder mehrere aus der aus Additiven, Reaktivverdünner, Fotoinitiatoren, Härtern und beliebigen Kombinationen von zwei oder mehr der vorstehenden Verbindungen bestehenden Gruppe ausgewählte Verbindungen. Beispielsweise kann das wenigstens eine Farbmittel als Additiv ein Dispergiermittel enthalten.

Gemäß einer dazu alternativen Ausführungsform der vorliegenden Erfindung ist es vorgesehen, dass wenigstens eine, bevorzugt wenigstens 10%, besonders bevorzugt wenigstens 50%, weiter bevorzugt wenigstens 80%, ganz besonders bevorzugt wenigstens 90% und höchst bevorzugt alle der Farbrezepturen, über die in den Datensätzen der Datenbank Informationen enthalten sind, aus Fertigprodukten, nämlich bevorzugt aus zwei bis fünfzehn Farben und besonders bevorzugt aus zwei bis zehn Farben zusammengesetzt sind. Diese können als Farbmittel wenigstens ein Effektpigment enthalten, welches bevorzugt aus der Gruppe ausgewählt ist, die aus Metalleffektpigmenten, Perlglanzpigmenten, mit Metalloxid beschichtetem Glimmer, Interferenzpigmenten, Lumineszenzpigmenten, UV-absorbierenden Pigmenten, IR-absorbierenden Pigmenten, photochromen Pigmenten, thermochromen Pigmenten, piezo-elektronischen Pigmenten, magnetischen Pigmenten und beliebigen Kombinationen von zwei oder mehr der vorstehenden Pigmenttypen besteht. Alternativ dazu können oder auch zusätzlich dazu können auch Nichteffektpigmente oder Farbstoffe eingesetzt werden.

Gemäß einer weiteren, dazu alternativen Ausführungsform der vorliegenden Erfindung ist es vorgesehen, dass ein Teil der Farbrezepturen, über die in den Datensätzen der Datenbank Informationen enthalten sind, aus Fertigprodukten, nämlich bevorzugt aus zwei bis fünf Farben sowie ggf. einer zusätzlich farbneutralen Komponente, wie Verschnitt, zusammengesetzt sind, wohingegen der andere Teil der Farbrezepturen aus Halbfertigprodukten, nämlich bevorzugt aus zwei bis zehn Halbfertigprodukten zusammengesetzt ist.

In Bezug auf die Art der Farbrezepturen, über die in den Datensätzen der Datenbank Informationen enthalten sind, ist die vorliegende Erfindung nicht limitiert. Vorzugsweise sind wenigstens eine, bevorzugt wenigstens 10%, besonders bevorzugt wenigstens 50%, weiter bevorzugt wenigstens 80%, ganz besonders bevorzugt wenigstens 90% und höchst bevorzugt alle Farbrezepturen, über die in den Datensätzen der Datenbank Informationen enthalten sind, aus der Gruppe ausgewählt, welche aus Druckfarben, Farblacken, Pulverlacken, Lederfarben und Textilfarben besteht.

Zusätzlich zu den Informationen über den Farbton und den Informationen über die Farbrezeptur enthalten die entsprechenden Datensätzen auch Informationen zu dem Applikationsverfahren und zu dem Substrat, woraus sich durch Applizieren der Farbrezeptur, über welche in diesen Datensätzen Informationen enthalten sind, mit dem Applikationsverfahren auf das Substrat der Farbton ergibt, über den in diesen Datensätzen Informationen enthalten sind. Während die Informationen zu dem Applikationsverfahren die Angabe des Applikationsverfahrens, wie beispielsweise Rollenoffsetdruck, die Angabe eines das Applikationsverfahren identifizierenden Zahlen- und/oder Buchstabencodes oder Textes oder dergleichen umfassen, handelt es sich bei den Informationen zu dem Substrat beispielsweise um die Angabe des Substrats, wie beispielsweise ein spezielles Papier, um die Angabe eines das Substrat identifizierenden Zahlen- und/oder Buchstabencodes oder Textes oder um die Daten einer über einen Wellenlängenbereich von 180 bis 4000 nm, bevorzugt von 400 bis 700 nm aufgenommenen Spektralkurve, wie insbesondere einer spektralen Reflexionskurve, oder um die Lab-Werte des Substrats oder dergleichen.

Bezüglich der Art des Applikationsverfahrens, über das in den Datensätzen der Datenbank Informationen enthalten sind, ist die vorliegende Erfindung nicht beschränkt. Mithin kann es sich bei dem Applikationsverfahren um jedes Applikationsverfahren handeln, mit dem eine Farbrezeptur auf ein Substrat aufgebracht werden kann. Beispielsweise kann es sich bei dem Applikationsverfahren, über das in den Datensätzen der Datenbank Informationen enthalten sind, um ein Applikationsverfahren handeln, welches aus der aus Druckverfahren, Lederfärbeprozessen, Textilfärbeprozessen, Streichen, Rollen, Spritzen, Tauchen, Walzen, Fluten, Glasieren, Pulverbeschichten, Emaillieren und beliebigen Kombinationen von zwei oder mehr der vorstehenden Verfahren bestehenden Gruppe ausgewählt ist. Vorzugsweise handelt es sich bei dem Applikationsverfahren, über das in den Datensätzen der Datenbank Informationen enthalten sind, um eines, welches aus der ausgewählt ist, welche aus Flachdruck, Tiefdruck, Flexodruck, Digitaldruck, Siebdruck, Hochdruck, Tampondruck, Transferdruck, Sublimationsdruck, Lichtdruck, Lederfärbeprozessen, Textilfärbeprozessen und beliebigen Kombinationen von zwei oder mehr der vorstehenden Verfahren besteht. Beispiele für Flachdruck sind Bogenoffsetdruck, Rollenoffsetdruck, Steindruck, Lithografiedruck, wohingegen Beispiele für Digitaldruck Xerografie und Inkjet sind.

Die vorstehenden Ausführungen zu den hierzu in den Datensätzen der Datenbank gespeicherten Informationen über Applikationsverfahren gelten für das in dem Schritt b) des erfindungsgemäßen Verfahrens einzugebende Zielapplikationsverfahren gleichermaßen. Mithin kann es sich bei dem in dem Schritt b) von dem Benutzer vorzugebenden Zielapplikationsverfahren jeweils um die Angabe des Applikationsverfahrens, die Angabe eines das Applikationsverfahren identifizierenden Zahlen- und/oder Nummerncodes oder Textes oder dergleichen handeln, wobei Zielapplikationsverfahren aus derselben, vorstehend erläuterten Gruppe von Verfahren ausgewählt sein kann.

Auch bezüglich der Art des Substrates, über das in den Datensätzen der Datenbank Informationen enthalten sind, und das Zielsubstrat, welches in dem Schritt b) eingegeben wird, ist die vorliegende Erfindung nicht besonders limitiert. Mithin kann es sich bei dem Substrat sowie bei dem Zielsubstrat um jedes Substrat handeln, auf das mit einem Applikationsverfahren eine Farbrezeptur aufgebracht werden kann. Beispielsweise kann es sich bei dem Substrat sowie bei dem Zielsubstrat um ein Substrat handeln welches aus der aus Papier, Karton, Pappe, Kunststofffolie, Leder, Textil, Metall, Holz, Glas, Keramik, Haut, metallisierten Oberflächen, Beton, Kunststoffkörpern, Laminaten, Verbundwerkstoffen und beliebigen Kombinationen von zwei oder mehr der vorstehenden Substrate bestehenden Gruppe ausgewählt ist. Vorzugsweise ist das Substrat bzw. das Zielsubstrat aus der Gruppe ausgewählt, welche aus Zeitungsdruckpapier, ungestrichenem Papier, gestrichenem Papier, Karton, Pappe, Wellpappe, Kunststofffolie (beispielsweise aus PE Polyethylen, OPP Polypropylen, OPA Polyamid, PVC Polyvinylchlorid, PET Polyethylenterephthalat, PLA Polylactid-Folie), Filzen, Vliesstoffen, Laminaten aus Kunststoff- und Aluminiumfolie, Leder, Textil und beliebigen Kombinationen von zwei oder mehr der vorstehenden Substrate besteht.

Bei den in den Datensätzen enthaltenen Informationen zu dem Substrat kann es sich um die Angabe des Substrats, wie beispielsweise ein spezielles Papier, um die Angabe eines das Substrat identifizierenden Zahlen- und/oder Buchstabencodes oder Textes, um die Daten einer über einen Wellenlängenbereich von 180 bis 4000 nm, bevorzugt von 400 bis 700 nm aufgenommenen Spektralkurve, wie insbesondere einer spektralen Reflexionskurve, um die Lab-Werte des Substrats oder dergleichen handeln. Alternativ dazu oder zusätzlich dazu kann für das Substrat beispielsweise auch dessen Bezeichnung oder Handelsname eingegeben oder die Spektralkurve eingemessen oder eingelesen werden. Vorzugsweise handelt es sich bei den in den Datensätzen der Datenbank gespeicherten Informationen über die jeweiligen Substrate um Daten einer Spektralkurve, die erhalten worden ist, indem von dem jeweiligen Substrat mit einem Spektrophotometer über einen Wellenlängenbereich von 180 bis 4000 nm, bevorzugt von 400 bis 700 nm eine Spektralkurve aufgenommen worden ist. Besonders bevorzugt handelt es sich dabei um eine über einen Wellenlängenbereich von 180 bis 4000 nm, bevorzugt von 400 bis 700 nm aufgenommene spektrale Reflexionskurve, wobei für diese die Gesamtreflexion, die Totalreflexion, die diffuse Reflexion oder die gerichtete Reflexion gemessen sein kann. Die Messung kann dabei beispielsweise bei einem Einstrahlwinkel/Sensormesswinkel von 45°/0°, bei 0°/45°, bei diffuser Einstrahlung/0°, bei diffuser Einstrahlung/8° oder bei anderen Winkel erfolgen, jeweils in Bezug zur Oberfläche. Die Daten der Spektralkurve können bei dieser Ausführungsform der vorliegenden Erfindung die Reflexionswerte für jeden Nanometer zwischen 180 bis 4000 nm, bevorzugt zwischen 400 und 700 nm sein, die Reflexionswerte für jeden fünften Nanometer zwischen 180 bis 4000 nm, bevorzugt zwischen 400 und 700 nm sein, die Reflexionswerte für jeden zehnten Nanometer zwischen 180 bis 4000 nm, bevorzugt zwischen 400 und 700 nm sein oder die Reflexionswerte in anderen Abständen.

Die vorstehenden Ausführungen zu dem Substrat und den hierzu in den Datensätzen der Datenbank gespeicherten Informationen gelten für das in dem Schritt b) des erfindungsgemäßen Verfahrens einzugebende Zielsubstrat gleichermaßen. Mithin kann das Zielsubstrat insbesondere aus der vorstehend beschriebenen Gruppe ausgewählt sein. Zudem ist es insbesondere möglich, in dem Schritt b) für das Zielsubstrat einen das Substrat identifizierenden Zahlen- und/oder Buchstabencode oder Text, die Daten einer über einen Wellenlängenbereich von 180 bis 4000 nm, bevorzugt von 400 bis 700 nm aufgenommenen Spektralkurve, wie insbesondere einer spektralen Reflexionskurve, die Lab-Werte des Zielsubstrats, die Bezeichnung oder den Handelsnamen des Zielsubstrats einzugeben.

Vorzugsweise erfolgt das Vorgeben in dem Schritt b) durch Eingaben des Benutzers in das Computerprogramm. Um das Vorgeben in dem Schritt b) durch Eingaben des Benutzers in das Computerprogramm zu ermöglichen, wird es in Weiterbildung des Erfindungsgedankens vorgeschlagen, dass das Computerprogramm anklickbare Vorauswahlen der einzugebenden Parameter, nämlich Zielapplikationsverfahren, Zielsubstrat und Zielfarbton, enthält. Alternativ dazu kann das Vorgeben auch durch Übertragung von Daten erfolgen, indem beispielsweise entsprechende Daten aus einer auf einem Datenträger oder in einem Computer gespeicherten Datei in das Computerprogramm übertragen werden.

Um das Vorgeben des Zielapplikationsverfahrens in dem Schritt b) zu ermöglichen, ist es bevorzugt, dass das Computerprogramm anklickbare Vorauswahlen von Applikationsverfahren enthält, aus denen der Benutzer in dem Schritt b) das Zielapplikationsverfahren durch Anklicken vorgeben kann. Alternativ dazu, kann das Computerprogramm so programmiert sein, dass es die Eingabe des Zielapplikationsverfahren als Text oder als das Zielapplikationsverfahren identifizierenden Zahlen- und/oder Textcodes ermöglicht.

In Weiterbildung des Erfindungsgedankens wird es vorgeschlagen, dass das Computerprogramm so ausgestaltet ist, dass der Benutzer in dem Schritt b) das Zielsubstrat auf mindestens eine und bevorzugt alle der folgenden Weisen vorgeben kann:
i) Übertragen der Daten einer mit einem Spektrophotometer zwischen 180 und 4000 nm und bevorzugt zwischen 400 und 700 nm aufgenommenen Spektralkurve, bevorzugt einer spektralen Reflexionskurve und besonders bevorzugt einer wie weiter vorstehend erläutert gemessenen spektralen Reflexionskurve des Zielsubstrats in das Computerprogramm, beispielsweise direkt (d.h. ohne zwischengeschalteten Datenträger), von einer DVD, einem USB-Stick oder dergleichen,
ii) Anklicken des Zielsubstrats aus einer in dem Computerprogramm gespeicherten Sammlung von Vorauswahlen für verschiedene Substrate,
iii) Eingeben der Werte einer Spektralkurve, bevorzugt einer spektralen Reflexionskurve und besonders bevorzugt einer wie weiter vorstehend erläutert gemessenen spektralen Reflexionskurve des Zielsubstrats in das Computerprogramm, beispielsweise indem die Reflexionswerte für die Wellenlängen zwischen 180 und 4000 nm und bevorzugt zwischen 400 und 700 nm in 1 nm-Abständen, in 5 nm-Abständen, in 10 nm-Abständen oder in anderen Abständen als Zahlen eingegeben werden,
iv) Eingeben oder Übertragen der Lab-Werte des Zielsubstrats oder von Werten eines anderen Farbraumes, wie LUV-Werte, RGB-Werte, LCh-Werte, XYZ-Werte oder dergleichen in das Computerprogramm.

Gleichermaßen ist es bevorzugt, dass das Computerprogramm so ausgestaltet ist, dass der Benutzer in dem Schritt b) den Zielfarbton auf mindestens eine und bevorzugt alle der folgenden Weisen vorgeben kann:
i) Übertragen der Daten einer mit einem Spektrophotometer zwischen 180 und 4000 nm und bevorzugt zwischen 400 und 700 nm aufgenommenen Spektralkurve, bevorzugt einer spektralen Reflexionskurve und besonders bevorzugt einer wie weiter vorstehend erläutert gemessenen spektralen Reflexionskurve des Zielfarbtons in das Computerprogramm, beispielsweise direkt (d.h. ohne zwischengeschalteten Datenträger), von einer DVD, einem USB-Stick oder dergleichen,
ii) Anklicken des Zielfarbtons aus einer in dem Computerprogramm gespeicherten Sammlung von Vorauswahlen für verschiedene Farbtöne,
iii) Eingeben oder Einlesen der Werte einer Spektralkurve, bevorzugt einer spektralen Reflexionskurve und besonders bevorzugt einer wie weiter vorstehend erläutert gemessenen spektralen Reflexionskurve des Zielfarbtons in das Computerprogramm, beispielsweise indem die Reflexionswerte für die Wellenlängen zwischen 180 und 4000 nm und bevorzugt zwischen 400 und 700 nm in 1 nm-Abständen, in 5 nm-Abständen, in 10 nm-Abständen oder in anderen Abständen als Zahlen eingegeben werden,
iv) Eingeben, Einlesen oder Übertragen der Lab-Werte des Zielfarbtons oder von Werten eines anderen Farbraumes, wie LUV-Werte, RGB-Werte, LCh-Werte, XYZ-Werte oder dergleichen in das Computerprogramm.

Erfindungsgemäß wird in dem Schritt c) die Datenbank mit einem Computerprogramm durchsucht, ob diese mindestens einen Datensatz enthält, dessen Farbrezeptur, über die in dem Datensatz Informationen enthalten sind, nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht. Dabei wird eine Toleranz eingeräumt, um dem Umstand Rechnung zu tragen, dass das menschliche Auge minimalste Unterschiede zwischen zwei nahezu identischen Farbtönen nicht wahrnehmen kann. Durch die Einrichtung einer Toleranz wird daher die Wahrscheinlichkeit eines Treffers in dem Schritt c) erhöht, ohne dass inakzeptable Abweichungen von dem vorgegebenen Zielfarbton hingenommen werden müssen.

Gemäß einer Ausführungsform der vorliegenden Erfindung ist in dem Computerprogramm eine Toleranz für den Schritt c) voreingestellt.

Alternativ dazu kann es vorgesehen sein, dass der Benutzer die Toleranz für den Schritt c) in das Computerprogramm eingeben kann. Das Computerprogramm kann hierzu so ausgestaltet werden, dass es eine stufenlose Einstellung der Toleranz, beispielsweise durch Eingabe eines Zahlenwertes, erlaubt. Ebenso ist es möglich, dass das Computerprogramm so ausgestaltet wird, dass der Benutzer die Toleranz gemäß in dem Computerprogramm vorgegebenen Voreinstellungen einstellen kann, beispielsweise indem der Benutzer eine von mehreren von dem Computerprogramm vorgegebenen Toleranzen anklickt und so auswählt. Ebenso ist es möglich, beide Ausführungsformen zu kombinieren, indem das Computerprogramm so ausgestaltet wird, dass der Benutzer entscheiden kann, ob er die Toleranz gemäß in dem Computerprogramm vorgegebenen Voreinstellungen oder beispielsweise durch Eingabe eines Zahlenwertes stufenlos einstellt.

In Weiterbildung des Erfindungsgedankens wird es vorgeschlagen, die maximale Toleranz so einzustellen, dass diese in dem Schritt c) einem Delta E-Wert von maximal 2, bevorzugt von maximal 1, besonders bevorzugt von maximal 0,5 entspricht und ganz besonders bevorzugt von maximal 0,2 entspricht, und zwar unabhängig davon, ob diese Toleranz in dem Computerprogramm voreingestellt ist oder von dem Benutzer eingegeben wird. Als Delta E-Werte können wiederum alle gängigen Delta E-Werte eingesetzt werden, wie beispielsweise der ΔE*_{ab}, der ΔE94, der ΔE₀₀, der DIN99, der DIN99ₒ, der CMC, der Lübbe, der Lübbe korrigiert, der CIECAM02. Vorzugsweise wird der ΔE₀₀ eingesetzt.

Gemäß einer weiteren bevorzugten Ausführungsform der vorliegenden Erfindung ist es vorgesehen, dass in dem Schritt d) nur die am besten den Zielfarbton ergebende Farbrezeptur angezeigt wird. Wenn in dem Schritt c) zwei oder mehr Datensätze gefunden werden, deren Farbrezepturen, über die in dem Datensatz Informationen enthalten sind, nach der Applikation mit dem in dem Schritt b) vorgegebenen Zielapplikationsverfahren auf das in dem Schritt b) vorgegebene Zielsubstrat Farbprodukte mit einem Farbton ergeben, der dem in dem Schritt b) vorgegebenen Zielfarbton entspricht oder maximal mit einer vorgegebenen Toleranz von diesem abweicht, wird daher gemäß dieser bevorzugten Ausführungsform nur derjenige Datensatz angezeigt wird, der ein Farbprodukt mit einem Farbton ergibt, der am wenigstens (also mit dem geringsten ΔE₀₀-Wert) von dem Zielfarbton abweicht.

Wie weiter vorstehend dargelegt, kann die Farbrezeptur prinzipiell als Rezept der Mengen aller einzelnen Rohstoffe angegeben werden. Da solche Farbrezepturen jedoch sehr komplex aufgebaut sind, bedeutet dies, dass die gesamte Farbe in einem insbesondere logistisch aufwendigen Produktionsprozess hergestellt werden muss, da zunächst alle Rohstoffe beschafft werden müssen. Daher ist es bevorzugt, dass die Farbrezeptur als Mischung aus Halbfertigprodukten, wie einer Mischung aus einem oder mehreren Verschnitten und einem oder mehreren Farbmitteln, oder als Mischung aus Fertigprodukten, wie einer Mischung aus mehreren Farben, gegebenenfalls zusätzlich mit Verschnitt, angegeben wird. Aus diesem Grund ist es bevorzugt, dass in dem Schritt d) die Zusammensetzung der Farbrezeptur i) als Mischung von Halbfertigprodukten, bevorzugt als Mischung von zwei bis fünfzehn Halbfertigprodukten und besonders bevorzugt als Mischung von zwei bis fünf Halbfertigprodukten angezeigt wird, oder ii) als Mischung von Fertigprodukten, bevorzugt als Mischung von zwei bis fünfzehn Fertigprodukten und besonders bevorzugt als Mischung von zwei bis fünf Fertigprodukten angezeigt wird, oder iii) als Mischung von Halbfertigprodukten mit Fertigprodukten angezeigt wird oder iv) als Mischung von Halbfertigprodukten mit Einzelkomponenten angezeigt wird oder v) als Mischung von Fertigprodukten mit Einzelkomponenten angezeigt wird oder vi) als Mischung von Halbfertigprodukten, Fertigprodukten und Einzelkomponenten angezeigt wird oder vii) als Mischung aus Einzelkomponenten angezeigt wird.

Das Anzeigen der in dem mindestens einem Datensatz gespeicherten Informationen über die Farbrezeptur umfasst bei diesen Ausführungsformen mithin die Angabe der Mengen und der Bezeichnung der einzelnen Halbfertigprodukte bzw. Fertigprodukte, aus denen die Farbrezeptur zusammengesetzt ist.

Die vorliegende Erfindung eignet sich insbesondere für die Verwendung von Datenbanken mit einer großen Anzahl von Datensätzen. Vorzugsweise umfasst die bei dem erfindungsgemäßen Verfahren verwendete Datenbank mehr als 10 Datensätze, weiter bevorzugt mehr als 100 Datensätze, noch weiter bevorzugt mehr als 1.000 Datensätze, insbesondere bevorzugt mehr als 10.000 Datensätze, besonders bevorzugt mehr als 100.000 Datensätze, ganz besonders bevorzugt mehr als 500.000 Datensätze und höchst bevorzugt eine Million Datensätze oder mehr.

Nach der Anzeige des in dem Schritt c) des erfindungsgemäßen Verfahrens gefundenen Treffers kann der Benutzer die gefundene Farbrezeptur herstellen oder von einem Dienstleister herstellen lassen. Insbesondere in dem Fall, dass die in dem Schritt c) gefundene Farbrezeptur nach den in der Datenbank enthaltenen Informationen nach der Applikation mit dem in dem Schritt b) vorgegebenen Zielapplikationsverfahren auf das in dem Schritt b) vorgegebene Zielsubstrat ein Farbprodukt mit einem Farbton ergibt, der von dem in dem Schritt b) vorgegebenen Zielfarbton innerhalb einer vorgegebenen Toleranz mit beispielsweise einem ΔE₀₀-Wert von 0,5 abweicht, ist es von Vorteil, wenn der Benutzer den sich ergebenden Farbton optisch anschauen kann, bevor er entscheidet, ob er diesen akzeptiert und die Farbe produziert oder produzieren lässt, oder nicht, und zwar, ohne zunächst die Farbrezeptur herstellen zu müssen. Um dies mit möglichst wenig Aufwand zu ermöglichen, ist es gemäß einer weiteren ganz besonders bevorzugten Ausführungsform der vorliegenden Erfindung vorgesehen, dass das Computerprogramm einen Testalgorithmus umfasst, welcher einen Farbton simulieren bzw. berechnen kann, wobei der simulierte bzw. berechnete Farbton mit einem Computer über einen von dem in dem Schritt b) vorgegebenen Zielapplikationsverfahren verschieden Testdrucker auf ein Testsubstrat ausgedruckt denselben Farbton ergibt, wie die Applikation der in dem Schritt c) gefundenen Farbrezeptur mit dem in dem Schritt b) vorgegebenen Zielapplikationsverfahren auf das in dem Schritt b) vorgegebene Zielsubstrat. Vorzugsweise ist das Computerprogramm bei dieser Ausführungsform so ausgestaltet, dass der Benutzer einen Testpapierdrucker sowie ein Testpapiersubstrat vorgeben kann, und zwar beispielsweise durch Anklicken eines entsprechenden Testdruckers und Testsubstrats in einer von dem Computerprogramm angezeigten Liste, oder durch Eingabe eines den Testdrucker und das Testsubstrat identifizierenden Zahlen- und/oder Nummerncodes oder dergleichen. Der Testdrucker ist vorzugsweise ein handelsüblicher und weltweit kommerziell erhältlicher Papierdrucker, eine Bogenoffsetdruckmaschine, eine Siebdruckmaschine oder eine Tiefdruckmaschine. Besonders bevorzugt ist der Testdrucker ein handelsüblicher und weltweit kommerziell erhältlicher Papierdrucker, insbesondere bevorzugt ein mindestens 4-Farbpapierdrucker und höchst bevorzugt ein mindestens 7-Farbpapierdrucker. Ein mindestens 4-Farbpapierdrucker heißt in diesem Zusammenhang ein mindestens 4-Farbpapierdrucker, ein 5-Farbpapierdrucker, ein 6-Farbpapierdrucker oder sogar noch mehr Farben umfassenden Farbpapierdrucker und ein mindestens 7-Farbpapierdrucker heißt in diesem Zusammenhang ein 7-Farbpapierdrucker, ein 8-Farbpapierdrucker, ein 9-Farbpapierdrucker oder sogar noch mehr Farben umfassenden Farbpapierdrucker. Damit können vorgegebene Farbtöne ganz besonders genau wiedergegeben werden. Übliche 4-Farbdrucker basieren typischerweise auf den Farben cyan, magenta, gelb und schwarz. Ein geeigneter mindestens 7-Farbdrucker umfasst gemäß der vorliegenden Erfindung vorzugsweise die Farben cyan, magenta, gelb, schwarz, orange, violett und grün. Ganz besonders ist der Testpapierdrucker ein handelsüblicher und weltweit kommerziell erhältlicher Tintenstrahldrucker oder Laserdrucker und höchst bevorzugt ein mindestens 7-Farbtintenstrahldrucker. Bei dem Testsubstrat handelt es sich vorzugsweise um ein handelsübliches und weltweit kommerziell erhältliches Tintenstrahldruck- oder Laserdruckpapier. Diese Ausführungsform ermöglicht es dem Benutzer, einfach und kostengünstig den Farbton anzuschauen und zu bewerten, der sich ergibt, wenn die in dem Schritt d) des erfindungsgemäßen Verfahrens angezeigte Farbrezeptur mit dem Zielapplikationsverfahren auf das Zielsubstrat appliziert wird, und zwar ohne, dass die in dem Schritt d) des erfindungsgemäßen Verfahrens angezeigte Farbrezeptur mit dem unter Umständen aufwendigen Zielapplikationsverfahren auf das unter Umständen aufwendig zu beschaffende Zielsubstrat appliziert werden muss. Dies deshalb, weil der mit dem Testalgorithmus errechnete Farbton dem Farbton entspricht, der sich ergibt, wenn die in dem Schritt d) angezeigte Farbrezeptur mit dem Zielapplikationsverfahren auf das Zielsubstrat appliziert wird. Mithin erlaubt es diese Ausführungsform der vorliegenden Erfindung dem Benutzer, besonders einfach und schnell zu prüfen, ob die in dem Schritt d) angezeigte Farbrezeptur für seine Bedürfnisse die richtige ist. Falls es die richtige ist, kann er diese bei einem geeigneten Hersteller in Auftrag geben.

Häufig handelt es sich bei dem von dem Benutzer beabsichtigten Farbprodukt nicht lediglich um ein mit einer Farbe versehenes Substrat, sondern beispielsweise um ein entsprechendes Farbprodukt, bei dem abschließend, nachdem die Farbrezeptur mit dem vorgegebenen Applikationsverfahren auf das vorgegebene Substrat aufgebracht worden ist, ein Überlack oder Primer aufgebracht worden ist. Wenn der Überlack oder Primer nicht farbneutral ist, wie beispielsweise im Falle von Mattlacken, Effektlacken, haptische Lacken, Duftlacken, verändert er den Farbton des Farbprodukts zumindest geringfügig. Selbst wenn der Überlack oder Primer farbneutral ist, beeinflusst der Überlack oder Primer den Glanz des Farbprodukts. Um diese Effekte bei dem Verfahren zu berücksichtigen, ist es bevorzugt, dass zumindest ein Teil der Datensätze, wie beispielsweise wenigstens 10% und bevorzugt wenigstens 30% der Datensätze auch Angaben zu einem Überlack oder Primer enthalten, wobei der in dem jeweilige Datensatz gespeicherte Farbton derjenige des Farbprodukts ist, welches erhalten wird, indem die in dem Datensatz gespeicherte Farbrezeptur mit dem in dem Datensatz gespeicherten Applikationsverfahren auf das in dem Datensatz gespeicherte Substrat gedruckt wird und dann der in dem Datensatz gespeicherte Überlack oder Primer aufgebracht wird. So wird sichergestellt, dass auch im Falle der Anwendung eines Überlacks oder Primers mit dem erfindungsgemäßen Verfahren eine Farbrezeptur ermittelt wird, die mit der vorgegebenen Toleranz den gewünschten Farbton für das den Überlack oder Primer enthaltenden Farbprodukt ergibt.

Aus den vorstehenden Gründen ist es bevorzugt, dass das bei dem erfindungsgemäßen Verfahren eingesetzte Computerprogramm so ausgestaltet ist, dass der Benutzer in dem Schritt b) einen Überlack oder Primer sowie eine Menge für den aufzubringenden Überlack oder Primer vorgeben kann und in dem Schritt c) die Datenbank durchsucht wird, ob diese mindestens einen Datensatz enthält, dessen gespeicherte Farbrezeptur mit einer vorgegebenen maximalen Toleranz den vorgegebenen Farbton ergibt, wenn die in dem Datensatz gespeicherte Farbrezeptur mit dem in dem Schritt b) vorgegebene Zielapplikationsverfahren auf das in dem Schritt b) vorgegebene Zielsubstrat appliziert wird und danach der in dem Schritt b) vorgegebene Überlack oder Primer in der vorgegebenen Menge aufgebracht wird.

Diese Ausführungsform ist insbesondere auch für Druckfarben bevorzugt, wobei dann der Überlack ein Überdrucklack ist, das Applikationsverfahren ein Druckverfahren ist und das Substrat ein Papier, Karton, Blech oder eine Kunststofffolie ist.

Neben Druckfarben eignet sich das erfindungsgemäße Verfahren insbesondere auch für Leder- und Textilfärbeprozesse, so dass das Applikationsverfahren insbesondere ein Lederfärbeprozess oder ein Textilfärbeprozess und das Substrat ein Leder oder ein Textil sein kann.

Gemäß einer weiteren besonders bevorzugten Ausführungsform der vorliegenden Erfindung ist es vorgesehen, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) ein oder mehrere Halbtöne des Farbprodukts,
ii) Glanzstufe des Farbprodukts,
iii) verschiedene Glanzstufen bei verschiedenen Betrachtungswinkeln des Farbprodukts,
iv) haptische (d.h. durch Tasten wahrnehmbare) Eigenschaften des Farbprodukts,
v) Kratzfestigkeit des Farbprodukts,
vi) Reißfestigkeit des Farbprodukts,
vii) Zugfestigkeit des Farbprodukts,
viii) Beständigkeit des Farbprodukts gegenüber Licht,
ix) Beständigkeit des Farbprodukts gegenüber Temperatur,
x) Beständigkeit des Farbprodukts gegenüber gamma-Strahlen,
xi) Beständigkeit des Farbprodukts gegenüber Chemikalien,
xii) Beständigkeit des Farbprodukts gegenüber Pasteurisation,
xiii) Beständigkeit des Farbprodukts gegenüber Sterilisation,
xiv) Beständigkeit des Farbprodukts gegenüber Feuchtigkeit,
xv) Beständigkeit des Farbprodukts gegenüber Delamination,
xvi) Abwesenheit von bestimmten Inhaltsstoffen in der Farbrezeptur,
xvii) Opazität des Farbprodukts,
xviii) Gleiteigenschaften des Farbprodukts.

Das Farbprodukt ist wiederum das Produkt, welches erhalten wird durch Applikation der Farbrezeptur, über die in dem entsprechenden Datensatz Informationen enthalten sind, mit dem Applikationsverfahren auf das Substrat, über welche in dem entsprechenden Datensatz Informationen enthalten sind. Gemäß einer weiteren Ausführungsform der vorliegenden Erfindung handelt es sich um einen Textilfärbeprozess, für den vorgesehen ist, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) Anti-statische Ausrüstung,
ii) Flammschutzausrüstung,
iii) Wasserabweisung,
iv) Ölabweisung,
v) Hydrophilierung,
vi) Fixierung,
vii) Appretur,
viii) Avivage,
ix) Beschichtung mit Wachs,
x) Beschichtung mit Fluorcarbonharzen,
xi) Lichtechtheit,
xii) Waschbeständigkeit,
xiii) Reibechtheit.

Gemäß einer weiteren Ausführungsform der vorliegenden Erfindung handelt es sich um einen Lederfärbeprozess, für den vorgesehen ist, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) Polyurethan-Zurichtung,
ii) Anilin-Zurichtung,
iii) Nitrocellulosezurichtung,
iv) Imprägnierung,
v) Prägung,
vi) Öl-Zurichtung,
vii) Wachs-Zurichtung,
viii) Lackierung (Öl-Lack),
ix) Lackierung (Kaltlack),
x) Lichtechtheit,
xi) Reibechtheit,
xii) Schmutzabweisung,
xiii) Glanz.

Diese drei zuletzt genannten Ausführungsformen erlauben es, mit dem erfindungsgemäßen Verfahren nicht nur eine Farbrezeptur zu ermitteln, die mit dem gewünschten Zielapplikationsverfahren auf das gewünschte Zielsubstrat aufgebracht ein Farbprodukt mit dem gewünschten Zielfarbton ergibt, sondern insbesondere auch eine entsprechende Farbrezeptur zu ermitteln, welche die gewünschten weiteren Eigenschaften aufweist, wie eine gewünschte Chemikalienbeständigkeit, zu einem gewünschten Glanz des Farbprodukts führt oder dergleichen.

Zur Umsetzung dieser Ausführungsform ist es zudem bevorzugt, dass das bei dem erfindungsgemäßen Verfahren eingesetzte Computerprogramm so ausgestaltet ist, dass der Benutzer in dem Schritt b) zusätzlich wenigstens eines der Charakteristika i) bis xviii) für Druckverfahren, bzw. i) bis xiii) für Textilien und Leder vorgeben kann.

Um die Vorteile für diese Ausführungsform in erhöhtem Maße zu erzielen, wird es in Weiterbildung des Erfindungsgedankens vorgeschlagen, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens drei, bevorzugt wenigstens fünf, besonders bevorzugt wenigstens 10, ganz besonders bevorzugt wenigstens 15 und höchst bevorzugt alle der Charakteristika i) bis xviii) enthalten und vorzugsweise der Benutzer diese in Schritt b) vorgeben kann.

In Weiterbildung des Erfindungsgedankens wird es vorgeschlagen, dass wenigstens 10%, bevorzugt wenigstens 50%, besonders bevorzugt wenigstens 80%, weiter bevorzugt wenigstens 90%, ganz besonders bevorzugt wenigstens 95% und höchst bevorzugt alle der in der Datenbank enthaltenen Datensätze bei drei verschiedenen Winkeln, bevorzugt bei 20°, bei 60° und bei 85°, mindestens jedoch bei 60° in Bezug auf die Oberfläche des Farbprodukts, bestimmte Glanzwerte enthalten, und, dass der Benutzer in dem Schritt b) Werte für die bei den drei verschiedenen Winkeln für das Farbprodukt zu erzielenden Zielglanzwerte vorgeben kann. Bei dieser Ausführungsform ist es insbesondere bevorzugt, dass die Glanzwerte zumindest zwischen glänzend, halbmatt und matt abgestuft sind. Beispielsweise können Mattlacke Glanzwerten zwischen 0 und 24 entsprechen, Halbmattlacke Glanzwerten zwischen 25 und 50 entsprechen und Glanzlacke Glanzwerten über 51 entsprechen.

Die Glanzwerte werden entsprechend der DIN 67530/ ISO 2813 gemessen und die Lacke beispielsweise mit einem 6pm-Rakel aufgebracht.

Gemäß einer weiteren ganz besonders bevorzugten Ausführungsform der vorliegenden Erfindung ist es vorgesehen, dass wenigstens 10%, bevorzugt wenigstens 50%, besonders bevorzugt wenigstens 80%, weiter bevorzugt wenigstens 90%, ganz besonders bevorzugt wenigstens 95% und höchst bevorzugt alle der in der Datenbank enthaltenen Datensätze Informationen über mindestens einen Halbton umfassen, wobei diese Informationen zumindest Informationen über den Farbton enthalten, den das Farbprodukt aufweist, das erhalten wird, wenn die Farbrezeptur, über die in dem entsprechenden Datensatz Informationen gespeichert sind, als Halbton mit dem Zielapplikationsverfahren auf das Zielsubstrat appliziert wird. Dies ermöglicht eine Aussage darüber, wie der gewünschte Farbton im Vollton und in den einzelnen Abstufungen/Halbtönen erscheint bzw. welche Spektralkurven sich entsprechend ergeben. Dies ist bevorzugt, um optisch als auch spektral gleiche Farbtöne, die aus mehreren verschiedenen Pigment-Kombinationen gemischt wurden, in den Halbtönen unterscheiden zu können. Die Volltöne können optisch und spektral gleich erscheinen, aber in den Halbtönen werden unterschiedliche Farbtöne/-orte erhalten, wenn unterschiedliche Pigmentkombinationen vorliegen.

Bei dieser Ausführungsform ist es insbesondere bevorzugt, dass die entsprechenden Datensätze entsprechende Informationen über mindestens zwei Halbtöne, bevorzugt über mindestens 4 Halbtöne und besonders bevorzugt mindestens 6 Halbtöne umfasst, wobei die Informationen über jeden der mindestens zwei Halbtöne zumindest Informationen über den jeweiligen Farbton enthalten, den das jeweilige Farbprodukt aufweist, das erhalten wird, wenn die Farbrezeptur, über die in dem entsprechenden Datensatz Informationen gespeichert sind, als jeweiliger Halbton mit dem Zielapplikationsverfahren auf das Zielsubstrat appliziert wird. Vorzugsweise decken die Halbtöne, über welche Informationen in dem jeweiligen Datensatz enthalten sind, mindestens 25%, besonders bevorzugt mindestens 50%, ganz besonders bevorzugt mindestens 75% und höchst bevorzugt den gesamten Halbtonbereich ab.

Zur Umsetzung dieser Ausführungsform ist es zudem bevorzugt, dass das bei dem erfindungsgemäßen Verfahren eingesetzte Computerprogramm so ausgestaltet ist, dass der Benutzer in dem Schritt b) Werte sowohl für den Vollton als auch für mindestens einen Halbton vorgeben (messen, einlesen) kann.

Insbesondere am Anfang des Aufbaus der für das erfindungsgemäße Verfahren eingesetzten Datenbank, in der diese noch nicht Datensätze für alle möglichen Kombinationen an Applikationsverfahren, Substrat und Farbton nebst den etwaigen weiteren optionalen Charakteristika i) bis xviii) enthält, wird es unvermeidlich sein, dass für eine spezielle Kombination von in dem Schritt b) eingegebenen Zielapplikationsverfahren, Zielsubstrat und Zielfarbton in dem Verfahrensschritt c) kein geeigneter Datensatz gefunden wird. Um auch in diesem Fall dem Benutzer eine Farbrezeptur anzugeben, mit der er sein gewünschtes Projekt durchführen kann, wird es in Weiterbildung des Erfindungsgedankens vorgeschlagen, dass das Computerprogramm einen Rezeptieralgorithmus umfasst, welcher es erlaubt, eine Farbrezeptur zu errechnen, welche nach der Applikation mit dem vorgegebenen Zielapplikationsverfahren auf das vorgegebene Zielsubstrat mit einer vorgegebenen maximalen Toleranz den für das Zielfarbprodukt vorgegebenen Farbton ergibt.

Vorzugsweise ist das Computerprogramm so ausgestaltet, dass der die Farbrezeptur errechnende Rezeptieralgorithmus durchgeführt wird, wenn in dem Schritt c) kein geeigneter Datensatz gefunden wurde.

Ferner ist es bevorzugt, dass vor dem Durchführen des die Farbrezeptur errechnenden Rezeptieralgorithmus von dem Computerprogramm in Bezug auf die Vorgaben des Benutzers geeignete Komponenten für die Farbrezeptur an den Rezeptieralgorithmus übertragen werden, aus denen allein der Rezeptieralgorithmus die Farbrezeptur errechnet. Unter Komponenten für die Farbrezeptur werden dabei Rohstoffe, Halbfertigprodukte und/oder Fertigprodukte verstanden, die in der Datenbank zusammen mit deren Eigenschaften und Farbeigenschaften gespeichert sind. Diese Ausführungsform ermöglicht es, dass eine Farbrezeptur errechnet wird, mit welcher der Benutzer nicht nur den gewünschten Zielfarbton erhält, sondern welche insbesondere auch die weiteren vorgegebenen Charakteristika, wie ein oder mehrere der Charakteristika i) bis xviii) erfüllt. Gibt beispielsweise der Benutzer in dem Schritt b) eine bestimmten zu erzielende Chemikalienbeständigkeit beispielsweise gegenüber Säuren vor, übertragt das Computerprogramm nur diejenigen Komponenten, also Rohstoffe, Halbfertigprodukte und/oder Fertigprodukte, an den Rezeptieralgorithmus weiter, welche diese Chemikalienbeständigkeit aufweisen.

Bei der vorstehenden Ausführungsform der vorliegenden Erfindung ist es zudem bevorzugt, dass die von dem Computerprogramm an den Rezeptieralgorithmus übertragenen Komponenten für die Farbrezeptur insbesondere wenigstens einen, bevorzugt wenigstens drei, weiter bevorzugt wenigstens fünf, besonders bevorzugt wenigstens zehn, ganz besonders bevorzugt wenigstens fünfzehn und höchst bevorzugt alle der von dem Benutzer vorgegebenen Kriterien i) bis xvi) erfüllen.

Gemäß einer weiteren ganz besonders bevorzugten Ausführungsform der vorliegenden Erfindung ist es vorgesehen, dass wenigstens 10%, bevorzugt wenigstens 20%, besonders bevorzugt wenigstens 40%, weiter bevorzugt wenigstens 60%, ganz besonders bevorzugt wenigstens 80% und höchst bevorzugt alle der Datensätze auch Informationen über die Spektralkurve der Oberfläche eines ersten Produktionsfarbprodukts umfassen, welches erhalten worden ist durch beispielsweise Aufstreichen eines Teils einer ersten Produktionscharge der in dem Schritt d) angezeigten Farbrezeptur auf ein weißes Aufstrichpapier und Aufnehmen einer Spektralkurve, besonders bevorzugt einer spektralen Reflexionskurve zwischen 180 bis 4000 nm, bevorzugt zwischen 400 und 700 nm der Oberfläche hiervon mit einem Spektralphotometer. Die erste Produktionscharge kann außer mit Aufstreichen auch mit jedem anderen Applikationsverfahren auf das Substrat, vorzugsweise Papier, aufgebracht werden, wie beispielsweise mit Laborandrucken, Spritzlackieren oder Rakelaufzügen. Diese Ausführungsform erleichtert die Qualitätskontrolle bei jeder weiteren hergestellten Produktionscharge. Bei jeder weiteren Produktionscharge kann dann nämlich zur Qualitätskontrolle ein Teil der weiteren Produktionscharge der Farbrezeptur auf dasselbe Aufstrichpapier aufgestrichen werden von der Oberfläche des so erhaltenen Farbprodukts eine Spektralkurve unter den gleichen Bedingungen aufgenommen werden, wie dies für die erste Produktionscharge erfolgt ist. Die so erhaltene Spektralkurve muss dann lediglich mit der im dem Datensatz gespeicherten Spektralkurve verglichen werden. Wenn die bei diesem Vergleich erhaltene Abweichung in einem vorgegebenen Toleranzbereich liegt, kann die Charge freigegeben werden. Andernfalls muss diese so lange durch Zugabe einer oder mehrerer Bestandteile korrigiert werden, bis für ein damit hergestelltes Referenzfarbprodukt ein im Toleranzbereich liegender Farbton erhalten wird.

In Weiterbildung des Erfindungsgedankens wird es vorgeschlagen, dass bei dieser Ausführungsform wenigstens 10%, weiter bevorzugt wenigstens 20%, besonders bevorzugt wenigstens 40%, noch weiter bevorzugt wenigstens 60%, ganz besonders bevorzugt wenigstens 80% und höchst bevorzugt alle der Datensätze auch die Spektralkurve der Oberfläche eines zweiten Produktionsfarbprodukts umfassen, welches erhalten worden ist durch beispielsweise Aufstreichen eines Teils einer zweiten Produktionscharge der in dem Schritt d) angezeigten Farbrezeptur auf ein weißes Aufstrichpapier und Aufnehmen einer Spektralkurve zwischen 180 bis 4000 nm, bevorzugt zwischen 400 und 700 nm der Oberfläche hiervon mit einem Spektralphotometer. Die zweite Produktionscharge kann außer mit Aufstreichen auch mit jedem anderen Applikationsverfahren auf das Substrat, vorzugsweise Papier, aufgebracht werden, wie beispielsweise mit Laborandrucken oder Rakelaufzügen.

Zudem ist es bei dieser Ausführungsform der vorliegenden Erfindung bevorzugt, dass die Datensätze zusätzlich zu der Spektralkurve des zweiten Produktionsfarbprodukts die Spektralkurve eines mit einer Rückstellprobe der ersten Produktionscharge hergestellten Farbprodukts umfassen, welches erhalten worden ist durch Aufstreichen eines Teils einer Rückstellprobe der ersten Produktionscharge der in dem Schritt d) angezeigten Farbrezeptur auf ein weißes Aufstrichpapier und Aufnehmen einer Spektralkurve zwischen 180 bis 4000 nm, bevorzugt zwischen 400 und 700 nm der Oberfläche hiervon mit einem Spektralphotometer gleichzeitig mit dem Aufstreichen und Aufnehmen der Spektralkurve des Teils der zweiten Produktionscharge der in dem Schritt d) angezeigten Farbrezeptur. Indem beide Proben gleichzeitig auf dasselbe weiße Aufstrichpapier aufgestrichen und verglichen wurden, lässt sich die Genauigkeit der Qualitätskontrolle noch weiter erhöhen.

In Weiterbildung des Erfindungsgedankens wird es vorgeschlagen, dass zumindest einer, vorzugsweise wenigstens 10%, weiter bevorzugt wenigstens 50%, besonders bevorzugt wenigstens 80%, weiter bevorzugt wenigstens 90%, ganz besonders bevorzugt wenigstens 95% und höchst bevorzugt alle der Datensätze Informationen über wenigstens einen Referenzfarbton, ein Referenzapplikationsverfahren sowie ein Referenzsubstrat umfassen, wobei sich der Referenzfarbton ergibt, wenn die Farbrezeptur, über die in dem Datensatz Informationen enthalten sind, mit dem Referenzapplikationsverfahren auf das Referenzsubstrat appliziert wird, wobei das Referenzapplikationsverfahren von dem Applikationsverfahren, über das in dem Datensatz Informationen enthalten sind, verschieden und/oder das Referenzsubstrat von dem Substrat, über das in dem Datensatz Informationen enthalten sind, verschieden ist.

Indem zumindest einer der Datensätze, bevorzugt eine Vielzahl der Datensätze und besonders bevorzugt alle Datensätze auch Informationen über wenigstens einen Referenzfarbton, ein Referenzapplikationsverfahren sowie ein Referenzsubstrat umfassen, kann eine hergestellte Charge der Farbrezeptur einfach einer zuverlässigen Qualitätskontrolle unterzogen werden. Es muss nämlich nur eine entsprechende Menge der hergestellten Charge der Farbrezeptur mit dem Referenzapplikationsverfahren auf das Referenzsubstrat aufgebracht werden und dann der Farbton des so hergestellten Referenzfarbprodukts mit dem Referenzfarbton, über den in dem Datensatz Informationen enthalten sind, verglichen werden. Wenn die bei diesem Vergleich erhaltene Abweichung in einem vorgegebenen Toleranzbereich liegt, kann die Charge freigegeben werden. Andernfalls muss diese so lange durch Zugabe einer oder mehrerer Bestandteile korrigiert werden, bis für ein damit hergestelltes Referenzfarbprodukt ein im Toleranzbereich liegender Farbton erhalten wird. Ein besonderer Vorteil des erfindungsgemäßen Verfahrens liegt darin, dass es die Qualitätskontrolle nicht erfordert, dass der Farbenhersteller die hergestellte Farbrezeptur mit dem von dem Kunden vorgegebenen (in der Regel eine komplexe Anlage erfordernden) Zielapplikationsverfahren auf das von dem Kunden vorgegebene (unter Umständen sehr spezielle und kommerziell schlecht verfügbare) Zielsubstrat aufbringt, sondern er lediglich ein Referenzsubstrat, welches beispielsweise ein auf der ganzen Welt verfügbares und gängiges Normpapier ist, mit einem (vorzugsweise einfachen und keine komplexe Anlage erfordernden) Referenzapplikationsverfahren aufbringen muss. Andernfalls müsste der Farbenhersteller für jede einzelne Farbrezeptur das entsprechende von dem Kunden vorgegebene Zielsubstrat, welches an seinem Standort möglicherweise gar nicht oder nur sehr schwer erhältlich ist, beschaffen und das spezielle von dem Kunden vorgegebene Zielapplikationsverfahren verwenden. Der Farbenhersteller, der eine Vielzahl verschiedenster Farbrezepturen herstellt, bräuchte in diesem Fall ein enorm großes Lager mit einer Vielzahl verschiedenster, unter Umständen schwer erhältlicher Zielsubstrate sowie eine Vielzahl von verschiedensten Applikationsanlagen, wie beispielsweise eine Rollenoffsetdruckmaschine, eine Tiefdruckmaschine und dergleichen. Erfindungsgemäß reicht hingegen unter Umständen ein Referenzsubstrat und ein Referenzapplikationsverfahren aus, wenn für alle in der Datenbank verfügbaren Farbrezepturen dasselbe Referenzsubstrat und Referenzapplikationsverfahren gespeichert sind. Unter Umständen werden mehrere Referenzapplikationsverfahren benötigt, beispielsweise bedingt durch die Konsistenz der Farben (pastös, flüssig, pulverförmig). Unter Normpapier wird im Sinne der vorliegenden Erfindung ein Papier verstanden, welches in einem nationalen oder internationalen Standard normiert ist. Beispiele für geeignete Normpapiere sind in der Norm DIN ISO 2846-1: 2017 spezifizierte Papiere. Werden beispielsweise Flüssigfarben auf transparenter Folie appliziert, so kann vor der Aufnahme der Spektralkurve ein Normpapier unterlegt werden, um so ebenfalls standardisierte Bedingungen für die Aufnahme der Spektralkurve zu gewährleisten.

Bezüglich der Anzahl der pro Datensatz enthaltenen Referenzfarbtöne ist die vorliegende Erfindung nicht besonders limitiert. Daher können einige der Datensätze jeweils Informationen über einen Referenzfarbton enthalten sowie das dazu gehörige Referenzapplikationsverfahren und das dazu gehörige Referenzsubstrat und andere Datensätze jeweils Informationen über zwei oder mehr verschiedene Referenzfarbtöne sowie die dazu gehörigen Referenzapplikationsverfahren und Referenzsubstrate enthalten, die jeweils mit einem anderen Applikationsverfahren und/oder auf einem anderen Substrat den gleichen Zielfarbton ergeben.

In Weiterbildung des Erfindungsgedankens wird es vorgeschlagen, dass in dem Schritt d) auch der wenigstens eine Referenzfarbton des mindestens einen Datensatzes angezeigt wird. Der Benutzer kann diesen dann für die spätere Qualitätskontrolle einsetzen oder speichern, sofern er die Farbrezeptur herstellt, oder dem Dienstleister, den er die Farbrezeptur herstellen lässt, weitergeben. Der wenigstens eine Referenzfarbton kann in jeder Form angegeben werden, welcher den Referenzfarbton eindeutig charakterisiert. Beispielsweis kann der wenigstens eine Referenzfarbton als Lab-Werte (oder Werte eines anderen Farbraumes, wie LUV-Werte, RGB-Werte, LCh-Werte, XYZ-Werte oder dergleichen), als Spektralkurve (insbesondere spektrale Reflexionskurve) zwischen 180 und 4000 nm und bevorzugt zwischen 400 und 700 nm oder als Daten einer Spektralkurve (insbesondere spektrale Reflexionskurve) zwischen 180 und 4000 nm und bevorzugt zwischen 400 und 700 nm angezeigt werden.

Ein weiterer Gegenstand der vorliegenden Erfindung ist eine Datenbank zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, wobei in der Datenbank eine Vielzahl von Datensätzen gespeichert ist, wobei zumindest einer und bevorzugt jeder der Datensätze jeweils zumindest Informationen über eine Farbrezeptur, über ein Substrat, über ein Applikationsverfahren und über den Farbton des sich nach der Applikation der Farbrezeptur mit dem Applikationsverfahren auf das Substrat ergebenden Farbprodukts umfasst,
dadurch gekennzeichnet, dass
i) die Datenbank für mindestens einen Farbton jeweils mindestens zwei verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von zumindest einem der mindestens zwei verschiedenen Datensätze von dem Substrat und/oder Applikationsverfahren von einem anderen der mindestens zwei verschiedenen Datensätze unterscheidet, wobei für jede der voneinander verschiedenen Farbrezepturen der mindestens zwei verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird, und
ii) die Datenbank für mindestens eine Farbrezeptur jeweils mindestens zwei verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat und/oder das Applikationsverfahren von zumindest einem der mindestens zwei verschiedenen Datensätze von dem Substrat und/oder Applikationsverfahren eines anderen der mindestens zwei verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von zumindest einem der mindestens zwei verschiedenen Datensätze von dem Farbton des Farbprodukts eines anderen der mindestens zwei verschiedenen Datensätze unterscheidet, wobei:
   iii) in zumindest 90% der Datensätze, in denen Informationen über einen Farbton gespeichert sind, welcher von dem Farbton eines oder mehrerer anderer Datensätze verschieden ist, ein anderer Farbtonidentifikationscode gespeichert ist als in den ein oder mehreren anderen Datensätzen,
      und/oder
   iv) in zumindest 90% der Datensätze, in denen Informationen über eine Farbrezeptur gespeichert sind, welche von der Farbrezeptur eines oder mehrerer anderer Datensätze verschieden ist, ein anderer Farbrezepturidentifikationscode gespeichert ist als in den ein oder mehreren anderen Datensätzen.

Vorzugsweise umfasst die Datenbank mehr als 10 Datensätze, weiter bevorzugt mehr als 100 Datensätze, noch weiter bevorzugt mehr als 1.000 Datensätze, besonders bevorzugt mehr als 10.000 Datensätze, besonders bevorzugt mehr als 100.000 Datensätze, ganz besonders bevorzugt mehr als 500.000 Datensätze und höchst bevorzugt eine Million Datensätze oder mehr.

Ein weiterer Gegenstand der vorliegenden Erfindung ist ein System zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, insbesondere zum Durchführen eines Verfahrens nach zumindest einer der vorigen Ausführungsformen, wobei das System umfasst:
a) eine zuvor beschriebene Datenbank,
b) ein Computerprogramm, das so programmiert ist, dass es einem Benutzer erlaubt, ein Zielapplikationsverfahren, ein Zielsubstrat sowie einen gewünschten, sich nach der Applikation einer Farbrezeptur mit dem vorgegebenen Zielapplikationsverfahren auf das vorgegebene Zielsubstrat für das erhaltene Farbprodukt ergebenden Zielfarbton in das Computerprogramm einzugeben,
c) wobei das Computerprogramm auch so programmiert ist, dass es die Datenbank durchsuchen kann, um zu ermitteln, ob die Datenbank mindestens einen Datensatz enthält, dessen Farbrezeptur, über die in dem Datensatz Informationen enthalten sind, nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht, und
d) wobei das Computerprogramm auch so programmiert ist, dass es dem Benutzer, wenn in dem Schritt c) mindestens ein geeigneter Datensatz gefunden wird, die in dem mindestens einem Datensatz gespeicherten Informationen über die Farbrezeptur anzeigt.

## Patentansprüche

1. Verfahren zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, wobei das Verfahren umfasst:
a) Bereitstellen einer Datenbank, in der eine Vielzahl von Datensätzen gespeichert ist, wobei
i) zumindest ein Teil und bevorzugt jeder der Datensätze jeweils zumindest Informationen über eine Farbrezeptur, über ein Substrat, über ein Applikationsverfahren und über den Farbton des sich nach der Applikation der in dem Datensatz gespeicherten Farbrezeptur mit dem in dem Datensatz gespeicherten Applikationsverfahren auf das in dem Datensatz gespeicherte Substrat ergebenden Farbprodukts umfasst, wobei die Informationen über die Farbrezeptur einen Farbrezepturidentifikationscode umfassen sowie die Informationen über den Farbton einen Farbtonidentifikationscode umfassen,
ii) die Datenbank für mindestens einen Farbton jeweils mindestens zwei verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder das Applikationsverfahren von zumindest einem der mindestens zwei verschiedenen Datensätze von dem Substrat und/oder Applikationsverfahren von einem anderen der mindestens zwei verschiedenen Datensätze unterscheidet, wobei für jede der voneinander verschiedenen Farbrezepturen der mindestens zwei verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird, und
iii) die Datenbank für mindestens eine Farbrezeptur jeweils mindestens zwei verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat und/oder das Applikationsverfahren von zumindest einem der mindestens zwei verschiedenen Datensätze von dem Substrat und/oder Applikationsverfahren eines anderen der mindestens zwei verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von zumindest einem der mindestens zwei verschiedenen Datensätze von dem Farbton des Farbprodukts eines anderen der mindestens zwei verschiedenen Datensätze unterscheidet,
b) Bereitstellen eines Computerprogramms, welches die Datenbank a) benutzt und Vorgeben eines Zielapplikationsverfahrens in dem Computerprogramm, eines Zielsubstrates sowie eines gewünschten, sich nach der Applikation einer Farbrezeptur mit dem vorgegebenen Zielapplikationsverfahren auf das vorgegebene Zielsubstrat für das erhaltene Farbprodukt ergebenden Zielfarbtons durch einen Benutzer,
c) Durchsuchen der Datenbank mit diesem Computerprogramm, ob diese mindestens einen Datensatz enthält, dessen Farbrezeptur, über die in dem Datensatz Informationen enthalten sind, nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht, und
d) wenn in dem Schritt c) mindestens ein geeigneter Datensatz gefunden wird, Anzeigen der in dem mindestens einem Datensatz gespeicherten Informationen über die Farbrezeptur,
**dadurch gekennzeichnet, dass**:
i) in zumindest 90% der Datensätze, in denen Informationen über einen Farbton gespeichert sind, welcher von dem Farbton eines oder mehrerer anderer Datensätze verschieden ist, ein anderer Farbtonidentifikationscode gespeichert ist als in den ein oder mehreren anderen Datensätzen,
ii) in zumindest 90% der Datensätze, in denen Informationen über eine Farbrezeptur gespeichert sind, welche von der Farbrezeptur eines oder mehrerer anderer Datensätze verschieden ist, ein anderer Farbrezepturidentifikationscode gespeichert ist als in den ein oder mehreren anderen Datensätzen,
iii) in zumindest 90% der Datensätze, in denen Informationen über einen Farbton gespeichert sind, welcher gleich zu dem Farbton eines oder mehrerer anderer Datensätze ist, der gleiche Farbtonidentifikationscode gespeichert ist wie in den ein oder mehreren anderen Datensätzen, und
iv) in zumindest 90% der Datensätze, in denen Informationen über eine Farbrezeptur gespeichert sind, welche gleich zu der Farbrezeptur eines oder mehrerer anderer Datensätze ist, der gleiche Farbrezepturidentifikationscode gespeichert ist wie in den ein oder mehreren anderen Datensätzen,
wobei in der Datenbank zwei Farbtöne als gleich bewertet sind, wenn diese voneinander um einen Delta E-Wert von maximal 0,5 abweichen, zwei Farbtöne als verschieden bewertet sind, wenn diese voneinander um einen Delta E-Wert von mehr als 0,5 abweichen, zwei Farbrezepturen als gleich bewertet sind, wenn diese die gleichen farbgebenden Bestandteile aufweisen und bezüglich der Mengen der einzelnen farbgebenden Bestandteile voneinander um maximal 0,5% pro farbgebenden Bestandteil abweichen, und zwei Farbrezepturen als verschieden bewertet sind, wenn diese wenigstens einen verschiedenen farbgebenden Bestandteil aufweisen oder, wenn diese die gleichen farbgebenden Bestandteile aufweisen, bezüglich der Mengen der einzelnen farbgebenden Bestandteile voneinander um mehr als 0,5% pro Bestandteil abweichen, und
wobei das Computerprogramm bei der Anlage eines neuen Datensatzes in die Datenbank durch einen Benutzer automatisch prüft, ob für die Farbrezeptur, über die in dem neu anzulegenden Datensatz Informationen gespeichert werden sollen, bereits mindestens ein Datensatz enthalten ist oder nicht, wobei, falls nicht, der neue Datensatz angelegt wird sowie in diesem ein neu vergebener Farbrezepturidentifikationscode gespeichert, und, falls ja, des Weiteren geprüft wird, ob der mindestens eine Datensatz Informationen über dasselbe Substrat, über dasselbe Applikationsverfahren und über den gleichen sich nach der Applikation der Farbrezeptur mit dem Applikationsverfahren auf das Substrat ergebenden Farbton enthält, wobei, wenn ja, der Benutzer eine Mitteilung erhält, dass in der Datenbank bereits ein entsprechender Datensatz enthalten ist und dann der anzulegende Datensatz nicht angelegt, und, wenn nein, in dem neu anzulegenden Datensatz derselbe Farbrezepturidentifikationscode gespeichert wird.

2. Verfahren nach Anspruch 1, **dadurch gekennzeichnet, dass** in der Datenbank zwei Farbtöne als gleich bewertet sind, wenn diese voneinander um einen ΔE₀₀-Wert von maximal 0,5 und einen dH* von maximal 0,5 abweichen und bevorzugt um einen ΔE₀₀-Wert von maximal 0,2 und einen dH* von maximal 0,2 abweichen, und zwei Farbtöne als verschieden bewertet sind, wenn diese voneinander um einen ΔE₀₀-Wert von mehr als 0,5 abweichen.

3. Verfahren nach Anspruch 1 oder 2, **dadurch gekennzeichnet, dass** die Datenbank für wenigstens 10%, bevorzugt für wenigstens 20%, besonders bevorzugt für wenigstens 50%, weiter bevorzugt für wenigstens 70%, ganz besonders bevorzugt für wenigstens 90% und höchst bevorzugt für alle Farbtöne jeweils mindestens zwei verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von jedem der mindestens zwei verschiedenen Datensätze von dem Substrat und/oder Applikationsverfahren von jedem anderen der mindestens zwei verschiedenen Datensätze unterscheidet, wobei für jede der voneinander verschiedenen Farbrezepturen der mindestens zwei verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird.

4. Verfahren nach Anspruch 3, **dadurch gekennzeichnet, dass** die Datenbank für den mindestens einen Farbton jeweils mindestens vier verschiedene, bevorzugt mindestens sechs verschiedene, besonders bevorzugt mindestens zehn verschiedene und ganz besonders bevorzugt mindestens zwanzig verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von jedem der mindestens vier verschiedenen Datensätze von dem Substrat und/oder Applikationsverfahren von jedem anderen der mindestens vier verschiedenen Datensätze unterscheidet, wobei für jede der voneinander verschiedenen Farbrezepturen der mindestens vier verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird.

5. Verfahren nach zumindest einem der vorhergehenden Ansprüche, **dadurch gekennzeichnet, dass** jeder Datensatz, für welchen nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat ein Farbprodukt mit einem von dem für mindestens einen anderen Datensatz erhaltenen verschiedenen Farbton erhalten wird, ein anderer Farbtonidentifikationscode gespeichert ist als in allen anderen des mindestens einen anderen Datensatzes.

6. Verfahren nach zumindest einem der vorhergehenden Ansprüche, **dadurch gekennzeichnet, dass** die Datenbank für wenigstens 10%, bevorzugt für wenigstens 20%, besonders bevorzugt für wenigstens 50%, weiter bevorzugt für wenigstens 70%, ganz besonders bevorzugt für wenigstens 90% und höchst bevorzugt für alle Farbrezepturen jeweils mindestens zwei verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat und/oder das Applikationsverfahren von jedem der mindestens zwei verschiedenen Datensätze von dem Substrat und/oder Applikationsverfahren von jedem anderen der mindestens zwei verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von jedem der mindestens zwei verschiedenen Datensätze von dem Farbton der Farbprodukte aller anderen der mindestens zwei verschiedenen Datensätze unterscheidet.

7. Verfahren nach Anspruch 6, **dadurch gekennzeichnet, dass** die Datenbank für die mindestens eine Farbrezeptur jeweils mindestens vier verschiedene, bevorzugt mindestens sechs verschiedene, besonders bevorzugt mindestens zehn verschiedene und ganz besonders bevorzugt mindestens zwanzig verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat und/oder das Applikationsverfahren von jedem der mindestens vier verschiedenen Datensätze von dem Substrat von jedem anderen der mindestens vier verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von jedem der mindestens vier verschiedenen Datensätze von dem Farbton der Farbprodukte aller anderen der mindestens vier verschiedenen Datensätze unterscheidet.

8. Verfahren nach zumindest einem der vorhergehenden Ansprüche, **dadurch gekennzeichnet, dass** in allen der Datensätze, in denen Informationen über eine Farbrezeptur gespeichert sind, welche von der Farbrezeptur eines oder mehrerer anderer Datensätze verschieden ist, ein anderer Farbrezepturidentifikationscode gespeichert ist als in den ein oder mehreren anderen Datensätzen.

9. Verfahren nach zumindest einem der vorhergehenden Ansprüche, **dadurch gekennzeichnet, dass** wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der mindestens zwei verschiedenen Datensätze, in denen jeweils derselben Farbrezepturidentifikationscode gespeichert ist, auch Informationen für mindestens einen weiteren Parameter enthalten, wobei diese Informationen über den mindestens einen weiteren Parameter für die Farbrezeptur charakteristisch sind und in allen der mindestens zwei verschiedenen Datensätze identisch sind, wobei der mindestens eine weitere Parameter vorzugsweise aus der Gruppe ausgewählt ist, die aus Beständigkeit der Farbrezeptur gegenüber Licht, gegenüber Temperatur, gegenüber gammaStrahlen, gegenüber Chemikalien, gegenüber Pasteurisation, gegenüber Sterilisation, gegenüber Feuchtigkeit und beliebigen Kombinationen von zwei oder mehr der vorgenannten besteht.

10. Verfahren nach zumindest einem der vorstehenden Ansprüche, **dadurch gekennzeichnet, dass** das Computerprogramm einen Testalgorithmus umfasst, welcher einen Farbton berechnen kann, wobei der berechnete Farbton mit einem Computer über einen von dem in dem Schritt b) vorgegebenen Zielapplikationsverfahren verschiedenen Testpapierdrucker auf ein Testpapiersubstrat ausgedruckt denselben Farbton ergibt, wie die Applikation der in dem Schritt c) gefundenen Farbrezeptur mit dem in dem Schritt b) vorgegebenen Zielapplikationsverfahren auf das in dem Schritt b) vorgegebene Zielsubstrat.

11. Verfahren nach zumindest einem der vorstehenden Ansprüche, **dadurch gekennzeichnet, dass** das Computerprogramm einen Rezeptieralgorithmus umfasst, welcher es erlaubt, eine Farbrezeptur zu errechnen, welche nach der Applikation mit dem vorgegebenen Zielapplikationsverfahren auf das vorgegebene Zielsubstrat mit einer vorgegebenen maximalen Toleranz den für das Zielfarbprodukt vorgegebenen Farbton ergibt, wobei das Computerprogramm so ausgestaltet, dass der die Farbrezeptur errechnende Rezeptieralgorithmus durchgeführt wird, wenn in dem Schritt c) kein geeigneter Datensatz gefunden wurde, und vor dem Durchführen des die Farbrezeptur errechnenden Rezeptieralgorithmus von dem Computerprogramm in Bezug auf die Vorgaben des Benutzers geeignete Komponenten für die Farbrezeptur an den Rezeptieralgorithmus übertragen werden, aus denen allein der Rezeptieralgorithmus die Farbrezeptur errechnet.

12. Datenbank zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, wobei in der Datenbank eine Vielzahl von Datensätzen gespeichert ist, wobei zumindest einer und bevorzugt jeder der Datensätze jeweils zumindest Informationen über eine Farbrezeptur, über ein Substrat, über ein Applikationsverfahren und über den Farbton des sich nach der Applikation der Farbrezeptur mit dem Applikationsverfahren auf das Substrat ergebenden Farbprodukts umfasst,
**dadurch gekennzeichnet, dass**
i) die Datenbank für mindestens einen Farbton jeweils mindestens zwei verschiedene Datensätze umfasst, welche jeweils denselben Farbtonidentifikationscode und Informationen über voneinander verschiedene Farbrezepturen, über ein Substrat sowie über ein Applikationsverfahren umfassen, wobei sich das Substrat und/oder Applikationsverfahren von zumindest einem der mindestens zwei verschiedenen Datensätze von dem Substrat und/oder Applikationsverfahren von einem anderen der mindestens zwei verschiedenen Datensätze unterscheidet, wobei für jede der voneinander verschiedenen Farbrezepturen der mindestens zwei verschiedenen Datensätze nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt mit dem gleichen Farbton erhalten wird, und
ii) die Datenbank für mindestens eine Farbrezeptur jeweils mindestens zwei verschiedene Datensätze umfasst, welche jeweils denselben Farbrezepturidentifikationscode und Informationen über die gleiche Farbrezeptur, über ein Substrat, über ein Applikationsverfahren sowie über einen sich nach der Applikation der in dem jeweiligen Datensatz gespeicherten Farbrezeptur mit dem in dem jeweiligen Datensatz gespeicherten Applikationsverfahren auf das in dem jeweiligen Datensatz gespeicherte Substrat für das Farbprodukt ergebenden Farbton umfassen, wobei sich das Substrat und/oder das Applikationsverfahren von zumindest einem der mindestens zwei verschiedenen Datensätze von dem Substrat und/oder Applikationsverfahren eines anderen der mindestens zwei verschiedenen Datensätze unterscheidet, und wobei sich nach der Applikation der jeweiligen Farbrezeptur mit dem in dem jeweiligen Datensatz gespeicherten Applikationsverfahren auf das in dem jeweiligen Datensatz gespeicherte Substrat jeweils ein Farbprodukt ergibt, wobei sich der Farbton des Farbprodukts von zumindest einem der mindestens zwei verschiedenen Datensätze von dem Farbton des Farbprodukts eines anderen der mindestens zwei verschiedenen Datensätze unterscheidet
**dadurch gekennzeichnet, dass**:
iii) in zumindest 90% der Datensätze, in denen Informationen über einen Farbton gespeichert sind, welcher von dem Farbton eines oder mehrerer anderer Datensätze verschieden ist, ein anderer Farbtonidentifikationscode gespeichert ist als in den ein oder mehreren anderen Datensätzen,
iv) in zumindest 90% der Datensätze, in denen Informationen über eine Farbrezeptur gespeichert sind, welche von der Farbrezeptur eines oder mehrerer anderer Datensätze verschieden ist, ein anderer Farbrezepturidentifikationscode gespeichert ist als in den ein oder mehreren anderen Datensätzen,
iii) in zumindest 90% der Datensätze, in denen Informationen über einen Farbton gespeichert sind, welcher gleich zu dem Farbton eines oder mehrerer anderer Datensätze ist, der gleiche Farbtonidentifikationscode gespeichert ist wie in den ein oder mehreren anderen Datensätzen, und
iv) in zumindest 90% der Datensätze, in denen Informationen über eine Farbrezeptur gespeichert sind, welche gleich zu der Farbrezeptur eines oder mehrerer anderer Datensätze ist, der gleiche Farbrezepturidentifikationscode gespeichert ist wie in den ein oder mehreren anderen Datensätzen,
wobei in der Datenbank zwei Farbtöne als gleich bewertet sind, wenn diese voneinander um einen Delta E-Wert von maximal 0,5 abweichen, zwei Farbtöne als verschieden bewertet sind, wenn diese voneinander um einen Delta E-Wert von mehr als 0,5 abweichen, zwei Farbrezepturen als gleich bewertet sind, wenn diese die gleichen farbgebenden Bestandteile aufweisen und bezüglich der Mengen der einzelnen farbgebenden Bestandteile voneinander um maximal 0,5% pro farbgebenden Bestandteil abweichen, und zwei Farbrezepturen als verschieden bewertet sind, wenn diese wenigstens einen verschiedenen farbgebenden Bestandteil aufweisen oder, wenn diese die gleichen farbgebenden Bestandteile aufweisen, bezüglich der Mengen der einzelnen farbgebenden Bestandteile voneinander um mehr als 0,5% pro Bestandteil abweichen.

13. System zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, zum Durchführen eines Verfahrens nach zumindest einem der Ansprüche 1 bis 11, wobei das System umfasst:
a) eine Datenbank nach Anspruch 12,
b) ein Computerprogramm, das so programmiert ist, dass es einem Benutzer erlaubt, ein Zielapplikationsverfahren, ein Zielsubstrat sowie einen gewünschten, sich nach der Applikation einer Farbrezeptur mit dem vorgegebenen Zielapplikationsverfahren auf das vorgegebene Zielsubstrat für das erhaltene Farbprodukt ergebenden Zielfarbton in das Computerprogramm einzugeben,
c) wobei das Computerprogramm auch so programmiert ist, dass es die Datenbank durchsuchen kann, um zu ermitteln, ob die Datenbank mindestens einen Datensatz enthält, dessen Farbrezeptur, über die in dem Datensatz Informationen enthalten sind, nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht,
d) wobei das Computerprogramm auch so programmiert ist, dass es dem Benutzer, wenn in dem Schritt c) mindestens ein geeigneter Datensatz gefunden wird, die in dem mindestens einem Datensatz gespeicherten Informationen über die Farbrezeptur anzeigt,
e) wobei das Computerprogramm auch so programmiert ist, dass es bei der Anlage eines neuen Datensatzes in die Datenbank durch einen Benutzer automatisch prüft, ob für die Farbrezeptur, über die in dem neu anzulegenden Datensatz Informationen gespeichert werden sollen, bereits mindestens ein Datensatz enthalten ist oder nicht, wobei, falls nicht, der neue Datensatz angelegt wird sowie in diesem ein neu vergebener Farbrezepturidentifikationscode gespeichert, und, falls ja, des Weiteren geprüft wird, ob der mindestens eine Datensatz Informationen über dasselbe Substrat, über dasselbe Applikationsverfahren und über den gleichen sich nach der Applikation der Farbrezeptur mit dem Applikationsverfahren auf das Substrat ergebenden Farbton enthält, wobei, wenn ja, der Benutzer eine Mitteilung erhält, dass in der Datenbank bereits ein entsprechender Datensatz enthalten ist und dann der anzulegende Datensatz nicht angelegt, und, wenn nein, in dem neu anzulegenden Datensatz derselbe Farbrezepturidentifikationscode gespeichert wird.

## Claims

1. Method for determining a colour formulation which, after application to a predetermined substrate using a predetermined application method, results in a colour product having a predetermined colour tone, wherein the method comprises:
a) providing a database in which a plurality of data sets are stored, wherein
i) at least a part and preferably each of the data sets respectively comprises at least information about a colour formulation, about a substrate, about an application method and about the colour tone of the colour product resulting after the application of the colour formulation stored in the data set using the application method stored in the data set to the substrate stored in the data set, wherein the information about the colour formulation comprises a colour formulation identification code and the information about the colour tone comprises a colour tone identification code,
ii) the database for at least one colour tone in each case comprises at least two different data sets, which in each case comprise the same colour tone identification code and information about mutually different colour formulations, about a substrate and about an application method, wherein the substrate and/or the application method of at least one of the at least two different data sets differs from the substrate and/or application method of one other of the at least two different data sets, wherein for each of the mutually different colour formulations of the at least two different data sets, after the application of the respective colour formulation using the application method stored in the respective data set to the substrate stored in the respective data set, a colour product with the same colour tone is obtained in each case, and
iii) the database for at least one colour formulation comprises in each case at least two different data sets, which in each case comprise the same colour formulation identification code and information about the same colour formulation, about a substrate, about an application method and about a colour tone resulting after the application of the colour formulation stored in the respective data set using the application method stored in the respective data set to the substrate stored in the respective data set for the colour product, wherein the substrate and/or the application method of at least one of the at least two different data sets differs from the substrate and/or application method of another of the at least two different data sets, and wherein after the application of the respective colour formulation using the application method stored in the respective data set to the substrate stored in the respective data set a colour product results in each case, wherein the colour tone of the colour product of at least one of the at least two different data sets differs from the colour tone of the colour product of another of the at least two different data sets,
b) providing a computer program that uses the database a), and specifying a target application method in the computer program, a target substrate and a target colour tone, desired by a user, resulting after the application of a colour formulation using the predetermined target application method to the predetermined target substrate for the obtained colour product,
c) searching the database using this computer program to see if it contains at least one data set whose colour formulation, about which information is contained in the data set, results in a colour product after the application using the target application method predetermined in step b) to the target substrate predetermined in step b), the colour product having a colour tone that corresponds to the target colour tone predetermined in step b) or deviates from it at most with a predetermined tolerance, and
d) if at least one suitable data set is found in step c), displaying the information about the colour formulation stored in the at least one data set,
**characterized in that**:
i) in at least 90% of the data sets, in which information about a colour tone is stored, which is different from the colour tone of one or more other data sets, a colour tone identification code is stored that is different to those in the one or more other data sets,
ii) in at least 90% of the data sets, in which information about a colour formulation is stored, which is different from the colour formulation of one or more other data sets, a colour formulation identification code is stored that is different to those in the one or more other data sets,
iii) in at least 90% of the data sets, in which information about a colour tone is stored, which is the same as the colour tone of one or more other data sets, a colour tone identification code is stored that is the same as those in the one or more other data sets, and
iv) in at least 90% of the data sets, in which information about a colour formulation is stored, which is the same as the colour formulation of one or more other data sets, a colour formulation identification code is stored that is the same as those in the one or more other data sets, and
wherein in the database two colour tones are evaluated as the same if they differ from each other by a delta E-value of a maximum of 0.5, two colour tones are evaluated as different if they differ from each other by a delta E-value of more than 0.5, two colour formulations are evaluated as the same if they have the same colouring constituents and differ from each other in terms of the amounts of the individual colouring constituents by a maximum of 0.5% per colouring constituent, and two colour formulations are evaluated as different if they have at least one different colouring constituent or, if they have the same colouring constituents, differ from each other in terms of the amounts of the individual colouring constituents by more than 0.5% per constituent, and
wherein, when a new data set is created in the database by a user, the computer program automatically checks whether or not at least one data set is already contained for the colour formulation about which information is to be stored in the new data set to be created, wherein, if not, the new data set is created and a newly assigned colour formulation identification code is stored in it, and, if yes, it is further checked whether the at least one data set contains information about the same substrate, about the same application method and about the same colour tone resulting from the application of the colour formulation to the substrate using the application method, wherein, if yes, the user receives a message that a corresponding data set is already contained in the database and then the data set to be created is not created, and, if no, the same colour formulation identification code is stored in the data set to be created.

2. Method according to Claim 1, **characterized in that**, in the database, two colour tones are evaluated as being the same if they differ from one another by an ΔE₀₀value of not more than 0.5 and a dH* of not more than 0.5, and preferably differ by an ΔE₀₀value of not more than 0.2 and a dH* of not more than 0.2, and two colour tones are evaluated as being different if they differ from one another by an ΔE₀₀value of more than 0.5.

3. Method according to Claim 1 or 2, **characterized in that** for at least 10%, preferably for at least 20%, particularly preferably for at least 50%, more preferably for at least 70%, very particularly preferably for at least 90%, and most preferably for all colour tones, the database comprises in each case at least two different data sets, each of which comprises the same colour tone identification code and information about mutually different colour formulations, about a substrate and about an application method, wherein the substrate and/or application method of each of the at least two different data sets differs from the substrate and/or application method of each of the other of the at least two different data sets, wherein for each of the mutually different colour formulations of the at least two different data sets, after application of the respective colour formulation using the application method stored in the respective data set to the substrate stored in the respective data set, a colour product with the same colour tone is obtained in each case.

4. Method according to Claim 3, **characterized in that** the database for the at least one colour tone respectively comprises at least four different, preferably at least six different, more preferably at least ten different, and most preferably at least twenty different data sets, each comprising the same colour tone identification code and information about different colour formulations, about a substrate, and about an application method, wherein the substrate and/or application method of each of the at least four different data sets is different from the substrate and/or application method of each of the other of the at least four different data sets, wherein for each of the mutually different colour formulations of the at least four different data sets, after application of the respective colour formulation using the application method stored in the respective data set to the substrate stored in the respective data set, a colour product with the same colour tone is obtained in each case.

5. Method according to at least one of the preceding claims, **characterized in that** each data set, for which, after the application of the colour formulation stored in the respective data set using the application method stored in the respective data set to the substrate stored in the respective data set, a colour product is obtained having a colour tone different from that obtained for at least one other data set, a different colour tone identification code is stored than in all the others of the at least one other data set.

6. Method according to at least one of the preceding claims, **characterized in that** for at least 10%, preferably for at least 20%, particularly preferably for at least 50%, more preferably for at least 70%, very particularly preferably for at least 90%, and most preferably for all colour formulations, the database comprises in each case at least two different data sets, which in each case comprise the same colour formulation identification code and information about the same colour formulation, about a substrate, about an application method and about a colour tone resulting after the application of the colour formulation stored in the respective data set using the application method stored in the respective data set to the substrate stored in the respective data set for the colour product, wherein the substrate and/or the application method of each of the at least two different data sets is different from the substrate and/or application method of each of the other of the at least two different data sets, and wherein after the application of the respective colour formulation using the application method stored in the respective data set to the substrate stored in the respective data set a colour product results in each case, wherein the colour tone of the colour product of each of the at least two different data sets is different from the colour tone of the colour products of all the other of the at least two different data sets.

7. Method according to Claim 6, **characterized in that** the database for the at least one colour formulation comprises in each case at least four different, preferably at least six different, particularly preferably at least ten different, and very particularly preferably at least twenty different data sets, which in each case comprise the same colour formulation identification code and information about the same colour formulation, about a substrate, about an application method and about a colour tone resulting after the application of the colour formulation stored in the respective data set using the application method stored in the respective data set to the substrate stored in the respective data set for the colour product, wherein the substrate and/or the application method of each of the at least four different data sets is/are different from the substrate of each of the other of the at least four different data sets, and wherein after the application of the respective colour formulation using the application method stored in the respective data set to the substrate stored in the respective data set a colour product results in each case, wherein the colour tone of the colour product of each of the at least four different data sets differs from the colour tone of the colour products of all of the other of the at least four different data sets.

8. Method according to at least one of the preceding claims, **characterised in that** in all of the data sets, in which information about the colour formulation is stored, which is different from the colour formulation of one or more other data sets, a colour formulation identification code is stored that is different to those in the one or more other data sets.

9. Method according to at least one of the preceding claims, **characterized in that** at least 10%, preferably at least 25%, more preferably at least 50%, even more preferably at least 75%, very particularly preferably at least 90%, and most preferably all of the at least two different data sets, in each of which the same colour formulation identification code is stored, also contain information for at least one further parameter, wherein this information about the at least one further parameter is characteristic of the colour formulation and is identical in all of the at least two different data sets, wherein the at least one further parameter is preferably selected from the group consisting of resistance of the colour formulation to light, to temperature, to gamma rays, to chemicals, to pasteurisation, to sterilisation, to moisture and any combinations of two or more of the aforementioned.

10. Method according to at least one of the preceding claims, **characterized in that** the computer program comprises a test algorithm that can calculate a colour tone, wherein the calculated colour tone, printed by a computer onto a test paper substrate via a test paper printer different from the target application method predetermined in step b), results in the same colour tone as the application of the colour formulation found in step c) to the target substrate predetermined in step b) using the target application method predetermined in step b).

11. Method according to at least one of the preceding claims, **characterized in that** the computer program comprises a formulation algorithm which allows a colour formulation to be calculated which, after the application using the predetermined target application method to the predetermined target substrate with a predetermined maximum tolerance, results in the colour tone predetermined for the target colour product, wherein the computer program is configured in such a way that the formulation algorithm which calculates the colour formulation is carried out if no suitable data set has been found in step c), and, before carrying out the formulation algorithm which calculates the colour formulation, suitable components for the colour formulation are transmitted from the computer program to the formulation algorithm with respect to the user's specifications, and the formulation algorithm calculates the colour formulation from these components only.

12. Database for determining a colour formulation which, after the application using a predetermined application method to a predetermined substrate, results in a colour product with a predetermined colour tone, wherein a plurality of data sets are stored in the database, wherein at least one and preferably each of the data sets respectively comprises at least information about a colour formulation, about a substrate, about an application method and about the colour tone of the colour product resulting after the application of the colour formulation to the substrate using the application method, **characterized in that**
i) the database for at least one colour tone in each case comprises at least two different data sets, which in each case comprise the same colour tone identification code and information about mutually different colour formulations, about a substrate and about an application method, wherein the substrate and/or the application method of at least one of the at least two different data sets differs from the substrate and/or application method of another of the at least two different data sets, wherein for each of the mutually different colour formulations of the at least two different data sets, after the application of the respective colour formulation using the application method stored in the respective data set to the substrate stored in the respective data set, a colour product with the same colour tone is obtained in each case, and
ii) the database for at least one colour formulation in each case comprises at least two different data sets, which in each case comprise the same colour formulation identification code and information about the same colour formulation, about a substrate, about an application method and about a colour tone resulting after the application of the colour formulation stored in the respective data set using the application method stored in the respective data set to the substrate stored in the respective data set for the colour product, wherein the substrate and/or the application method of at least one of the at least two different data sets differs from the substrate and/or application method of another of the at least two different data sets, and wherein after the application of the respective colour formulation using the application method stored in the respective data set to the substrate stored in the respective data set a colour product results in each case, wherein the colour tone of the colour product of at least one of the at least two different data sets differs from the colour tone of the colour product of another of the at least two different data sets
**characterized in that**:
iii) in at least 90% of the data sets, in which information about a colour tone is stored, which is different from the colour tone of one or more other data sets, a colour tone identification code is stored that is different to those in the one or more other data sets,
iv) in at least 90% of the data sets, in which information about the colour formulation is stored, which is different from the colour formulation of one or more other data sets, a colour formulation identification code is stored that is different to those in the one or more other data sets,
iii) in at least 90% of the data sets, in which information about a colour tone is stored, which is the same as the colour tone of one or more other data sets, a colour tone identification code is stored that is the same as those in the one or more other data sets, and
iv) in at least 90% of the data sets, in which information about a colour formulation is stored, which is the same as the colour formulation of one or more other data sets, a colour formulation identification code is stored that is the same as those in the one or more other data sets, and
wherein in the database, two colour tones are evaluated as the same if they differ from one another by a delta E-value of a maximum of 0.5, two colour tones are evaluated as different if they differ from one another by a delta E-value of more than 0.5, two colour formulations are evaluated as the same if they have the same colouring constituents and differ from each other in terms of the amounts of the individual colouring constituents by a maximum of 0.5% per colouring constituent, and two colour formulations are evaluated as different if they have at least one different colouring constituent or, if they have the same colouring constituents, differ from each other in terms of the amounts of the individual colouring constituents by more than 0.5% per constituent.

13. System for determining a colour formulation, which, after application to a predetermined substrate using a predetermined application method, gives a colour product with a predetermined colour tone, for carrying out a method according to at least one of Claims 1 to 11, wherein the system comprises:
a) a database according to Claim 12,
b) a computer program that is programmed in such a way that it allows a user to enter into the computer program a target application method, a target substrate and a desired target colour tone resulting from the application of a colour formulation using the predetermined target application method to the predetermined target substrate for the obtained colour product,
c) wherein the computer program is also programmed in such a way that it can search the database in order to determine whether the database contains at least one data set whose colour formulation, about which information is contained in the data set, results in a colour product after the application using the target application method predetermined in step b) to the target substrate predetermined in step b), said colour product having a colour tone that corresponds to the target colour tone predetermined in step b) or deviates from it at most with a predetermined tolerance,
d) wherein the computer program is also programmed in such a way that, if at least one suitable data set is found in step c), it displays to the user the information about the colour formulation stored in the at least one data set,
e) wherein the computer program is also programmed in such a way that, when a new data set is created in the database by a user, it automatically checks whether or not at least one data set is already contained for the colour formulation about which information is to be stored in the new data set to be created, wherein, if not, the new data set is created and a newly assigned colour formulation identification code is stored in it, and, if yes, it is further checked whether the at least one data set contains information about the same substrate, about the same application method and about the same colour tone resulting from the application of the colour formulation to the substrate using the application method, wherein, if yes, the user receives a message that a corresponding data set is already contained in the database and then the data set to be created is not created, and, if no, the same colour formulation identification code is stored in the data set to be created.

## Revendications

1. Procédé de détermination d'une formulation de couleur qui, après application avec une méthode d'application prédéterminée sur un substrat prédéfini, donne un produit de couleur avec une teinte prédéterminée, le procédé comprenant :
a) fournir une base de données dans laquelle est stockée une pluralité de ensembles de données,
i) au moins une partie et de préférence chacun des ensembles de données contenant au moins des informations sur une formulation de couleur, sur un substrat, sur une méthode d'application et sur la teinte de la formulation de couleur stockée dans l'ensemble de données avec la méthode d'application stockée dans l'ensemble de données sur le produit de couleur résultant stocké dans l'ensemble de données, les informations sur la formulation de couleur comprenant un code d'identification de la formulation de couleur et les informations sur la teinte comprenant un code d'identification de la teinte,
ii) la base de données comprenant au moins deux ensembles de données différents pour au moins une teinte, comprenant chacun le même code d'identification de teinte et des informations sur des formulations de couleur différentes les unes des autres, sur un substrat ainsi que sur une méthode d'application, le substrat et/ou la méthode d'application d'au moins un des au moins deux ensembles de données différents étant différents du substrat et/ou de la méthode d'application d'un autre des au moins deux ensembles de données différents, un produit de couleur de la même teinte étant obtenu pour chacune des formulations de couleur différentes les unes des autres des au moins deux ensembles de données différents après l'application de la formulation de couleur respective avec la méthode d'application stockée dans l'ensemble de données respectif sur le substrat stocké dans l'ensemble de données respectif, et
iii) la base de données pour au moins une formulation de couleur comprenant au moins deux ensembles de données différents, chacun comprenant le même code d'identification de formulation de couleur et des informations sur la même formulation de couleur, sur un substrat, sur une méthode d'application et sur une teinte résultant de la méthode d'application stockée dans l'ensemble de données respectif après l'application de la formulation de couleur stockée dans l'ensemble de données respectif avec la méthode d'application stockée dans l'ensemble de données respectif sur le substrat stocké dans l'ensemble de données respectif pour le produit de couleur, le substrat et/ou la méthode d'application d'au moins un des au moins deux ensembles de données différents étant différents du substrat et/ou de la méthode d'application d'un autre des au moins deux ensembles de données différents, et après l'application de la formulation de couleur respective avec la méthode d'application stockée dans l'ensemble de données respectif sur le substrat stocké dans l'ensemble de données respectif, un produit de couleur d'au moins un des au moins deux ensembles de données différents étant différent de la teinte du produit de couleur d'un autre des au moins deux ensembles de données différents,
b) fournir, par un utilisateur, un programme informatique qui utilise la base de données a) et prédéterminer une méthode d'application cible dans le programme informatique, un substrat cible ainsi que une teinte cible souhaitée résultant de l'application d'une formulation de couleur avec la méthode d'application cible prédéterminée sur le substrat cible prédéterminé pour le produit de couleur obtenu,
c) rechercher dans la base de données à l'aide de ce programme informatique s'il contient au moins un ensemble de données dont la formulation de couleur, sur laquelle des informations sont contenues dans l'ensemble de données, donne, après l'application avec la méthode d'application cible prédéterminée à l'étape b) sur le substrat cible prédéterminé à l'étape b), un produit de couleur avec une teinte correspondant à la teinte cible prédéterminée à l'étape b) ou s'en écartant au maximum avec une tolérance prédéterminée, et
d) si au moins un ensemble de données approprié est trouvé à l'étape c), afficher les informations sur la formulation de la couleur stockées dans l'au moins un ensemble de données,
**caractérisé en ce que** :
i) dans au moins 90 % des ensembles de données dans lesquels sont stockées des informations sur une teinte différente de la teinte d'un ou plusieurs autres ensembles de données, un code d'identification de teinte différent de celui d'un ou plusieurs autres ensembles de données est stocké,
ii) dans au moins 90 % des ensembles de données dans lesquels sont stockées des informations sur une formulation de couleur différente de la formulation de couleur d'un ou de plusieurs autres ensembles de données, un code d'identification de formulation de couleur différent de celui d'un ou plusieurs autres ensembles de données est stocké,
iii) dans au moins 90 % des ensembles de données dans lesquels sont stockées des informations sur une teinte égale à la teinte d'un ou plusieurs autres ensembles de données, le même code d'identification de teinte est stocké que dans les un ou plusieurs autres ensembles de données, et
iv) dans au moins 90 % des ensembles de données dans lesquels sont stockées des informations sur une formulation de couleur égale à la formulation de couleur d'un ou de plusieurs autres ensembles de données, le même code d'identification de formulation de couleur est stocké que dans les un ou plusieurs autres ensembles de données,
deux teintes étant évaluées égales dans la base de données si elles diffèrent l'une de l'autre d'une valeur Delta E de 0,5 au maximum, deux teintes étant évaluées différentes si elles diffèrent l'une de l'autre d'une valeur Delta E de plus de 0,5, deux formulations de couleurs étant évaluées égales si elles contiennent les mêmes composants colorants et diffèrent l'une de l'autre de 0,5 % au maximum par composant colorant en ce qui concerne les quantités de composants colorants individuels, et deux formulations de couleurs étant évaluées différentes si elles contiennent au moins un composant colorant différent ou, si elles contiennent les mêmes composants colorants, diffèrent l'une de l'autre de plus de 0,5 % par composant en ce qui concerne les quantités de composants colorants individuels, et
le programme informatique vérifiant automatiquement, lors de la création d'un nouvel ensemble de données dans la base de données par un utilisateur, si au moins un ensemble de données est déjà contenu ou non pour la formulation de couleur sur laquelle des informations doivent être stockées dans le nouvel ensemble de données à créer, le nouvel ensemble de données étant créé, si ce n'est pas le cas, et un code d'identification de formulation de couleur nouvellement attribué étant stocké dans cet ensemble de données, et, si c'est le cas, étant en outre vérifié, si le au moins un ensemble de données contient des informations sur le même substrat, sur la même méthode d'application et sur la même teinte obtenue après l'application de la formulation de couleur sur le substrat avec la méthode d'application, l'utilisateur étant informé, si c'est le cas, qu'un ensemble de données correspondant est déjà contenu dans la base de données et que l'ensemble de données à créer n'est alors pas créé, et, si ce n'est pas le cas, le même code d'identification de formulation de couleur étant stocké dans le nouvel ensemble de données à créer.

2. Procédé selon la revendication 1, **caractérisé en ce que** dans la base de données, deux nuances sont évaluées égales si elles diffèrent l'une de l'autre d'une valeur ΔE₀₀ de 0,5 au maximum et d'un dH* de 0,5 au maximum et de préférence d'une valeur ΔE₀₀ de 0,2 au maximum et d'un dH* de 0,2 au maximum, et deux nuances sont évaluées différentes si elles diffèrent l'une de l'autre d'une valeur ΔE₀₀ de plus de 0,5.

3. Procédé selon la revendication 1 ou 2, **caractérisé en ce que** la base de données comprend pour au moins 10%, de préférence pour au moins 20%, de manière particulièrement préférée pour au moins 50%, de manière encore plus préférée pour au moins 70%, de manière tout particulièrement préférée pour au moins 90% et, de manière hautement préférée pour toutes les teintes au moins deux ensembles de données différents, qui comprennent chacun le même code d'identification de teinte et des informations sur des formulations de couleur différentes les unes des autres, sur un substrat ainsi que sur une méthode d'application, le substrat et/ou la méthode d'application de chacun des au moins deux ensembles de données différents étant différents du substrat et/ou de la méthode d'application de chacun des au moins deux autres ensembles de données différents, un produit de couleur de la même teinte étant obtenu pour chacune des formulations de couleur différentes les unes des autres des au moins deux ensembles de données différents après l'application de la formulation de couleur respective avec la méthode d'application stockée dans l'ensemble de données respectif sur le substrat stocké dans l'ensemble de données respectif.

4. Procédé selon la revendication 3, **caractérisé en ce que** la base de données pour au moins une teinte comprend au moins quatre différentes, de préférence au moins six différentes, de manière particulièrement préférée au moins dix différentes et de manière tout particulièrement préférée au moins vingt différentes ensembles de données différents, qui comprennent chacun le même code d'identification de teinte et des informations sur des formulations de couleur différentes les unes des autres, sur un substrat ainsi que sur une méthode d'application, le substrat et/ou la méthode d'application de chacun des au moins quatre ensembles de données différents du substrat et/ou de la méthode d'application étant différents de chacun des autres des au moins quatre ensembles de données différents, un produit de couleur de la même teinte étant obtenu pour chacune des formulations de couleur différentes les unes des autres des au moins quatre ensembles de données différents après l'application de la formulation de couleur respective avec la méthode d'application stockée dans l'ensemble de données respectif sur le substrat stocké dans l'ensemble de données respectif.

5. Procédé selon au moins l'une des revendications précédentes, **caractérisé en ce que** chaque ensemble de données pour lequel, après l'application de la formulation de couleur stockée dans l'ensemble de données respectif avec la méthode d'application stockée dans l'ensemble de données respectif sur le substrat stocké dans l'ensemble de données respectif, un produit de couleur avec une teinte différente de la teinte obtenue pour au moins un autre ensemble de données est obtenu, un code d'identification de teinte différent est stocké que dans tous les autres de l'au moins un autre ensemble de données.

6. Procédé selon au moins l'une des revendications précédentes, **caractérisé en ce que** la base de données comprend pour au moins 10 %, de préférence pour au moins 20 %, de manière particulièrement préférée pour au moins 50 %, de manière encore plus préférée pour au moins 70 %, de manière tout particulièrement préférée pour au moins 90 % et de manière hautement préférée pour toutes les formulations de couleurs, au moins deux ensembles de données différents, chacun contenant le même code d'identification de formulation de couleur et des informations sur la même formulation de couleur, sur un substrat, sur une méthode d'application ainsi que sur un l'application de la formulation de couleur stockée dans l'ensemble de données respectif avec la méthode d'application stockée dans l'ensemble de données respectif sur le substrat stocké dans l'ensemble de données respectif pour le produit de couleur, le substrat et/ou la méthode d'application de chacun des au moins deux ensembles de données différents du substrat et/ou de la procédure d'application étant différents de chacun des au moins deux autres ensembles de données différents, et après l'application de la formulation de couleur respective avec la méthode d'application stockée dans l'ensemble de données respectif sur le substrat stocké dans l'ensemble de données respectif, il en résulte un produit de couleur, la teinte du produit de couleur de chacun des au moins deux ensembles de données différents de la teinte des produits de couleur de tous les autres des au moins deux ensembles de données différents.

7. Procédé selon la revendication 6, **caractérisé en ce que** la base de données pour au moins une formulation de couleur comprend au moins quatre ensembles de données différents, de préférence au moins six ensembles de données différents, de manière particulièrement préférée au moins dix ensembles de données différents et de manière tout particulièrement préférée au moins vingt ensembles de données différents, qui comprennent chacun le même code d'identification de formulation de couleur et des informations sur la même formulation de couleur, sur un substrat, sur une méthode d'application ainsi que sur une teinte résultant de l'application de la formulation de couleur stockée dans l'ensemble de données respectif avec la méthode d'application stockée dans l'ensemble de données respectif sur le substrat stocké dans l'ensemble de données respectif pour le produit de couleur, le substrat et/ou la méthode d'application de chacun des au moins quatre ensembles de données différents étant différents de chacun des autres des au moins quatre ensembles de données différents, et après l'application de la formulation de couleur respective avec la méthode d'application stockée dans l'ensemble de données respectif, il en résulte un produit de couleur sur le substrat stocké dans l'ensemble de données respectif, la teinte du produit de couleur de chacun des au moins quatre ensembles de données différents étant différente de la teinte des produits de couleur de tous les autres au moins quatre ensembles de données différents.

8. Procédé selon au moins l'une des revendications précédentes, **caractérisé en ce que** dans tous les ensembles de données dans lesquels sont stockées des informations sur une formulation de couleur qui est différente de la formulation de couleur d'un ou plusieurs autres ensembles de données, un code d'identification de formulation de couleur différent est stocké par rapport aux un ou plusieurs autres ensembles de données.

9. Procédé selon au moins l'une des revendications précédentes, **caractérisé en ce qu'**au moins 10 %, de préférence au moins 25 %, de préférence encore au moins 50 %, de préférence en outre au moins 75 %, de préférence tout particulièrement au moins 90 % et de manière hautement préférée toutes les au moins deux séries de données différentes dans lesquelles est stocké le même code d'identification de formulation de couleur contiennent également des informations pour au moins un autre paramètre, ces informations sur au moins un autre paramètre étant caractéristiques de la formulation de couleur et étant égales dans chacune des au moins deux séries de données différentes, ledit au moins un autre paramètre étant de préférence choisi dans le groupe constitué par la résistance de la formulation de couleur à la lumière, à la température, aux rayons gamma, aux produits chimiques, à la pasteurisation, à la stérilisation, à l'humidité et à toute combinaison de deux ou plus de ce qui précède.

10. Procédé selon au moins l'une des revendications précédentes, **caractérisé en ce que** le programme informatique comprend un algorithme de test qui peut calculer une teinte, la teinte calculée étant imprimée avec un ordinateur sur un substrat de papier test par l'intermédiaire d'une imprimante de papier test différente de la méthode d'application cible prédéterminée à l'étape b) et donnant la même teinte que l'application de la formulation de couleur trouvée à l'étape c) avec la méthode d'application cible prédéterminée à l'étape b) sur le substrat cible prédéterminé à l'étape b).

11. Procédé selon au moins l'une des revendications précédentes, **caractérisé en ce que** le programme informatique comprend un algorithme de formulation qui permet de calculer une formulation de couleur qui, après l'application avec la méthode d'application cible prédéterminée sur le substrat cible prédéterminé avec une tolérance maximale prédéterminée, donne la teinte prédéterminée pour le produit de couleur cible, le programme informatique étant conçu de telle sorte que l'algorithme de formulation calculant la formulation de couleur est exécuté si aucun ensemble de données approprié n'a été trouvé à l'étape c), et avant d'exécuter l'algorithme de formulation calculant la formulation de couleur, des composants appropriés pour la formulation de couleur par rapport aux spécifications de l'utilisateur sont transmis par le programme informatique à l'algorithme de formulation de couleur, à partir desquels seul l'algorithme de formulation de couleur calcule la formulation de couleur.

12. Base de données pour déterminer une formulation de couleur qui, après l'application avec une méthode d'application prédéterminé sur un substrat prédéterminé, donne un produit de couleur avec une teinte prédéterminée, où un grand nombre d'ensembles de données sont stockés dans la base de données, où au moins un et de préférence chacun des ensembles de données contient au moins des informations sur une formulation de couleur, sur un substrat, sur une méthode d'application et sur la teinte du produit de couleur résultant de l'application de la formulation de couleur avec la méthode d'application sur le substrat,
**caractérisée en ce que**
i) la base de données comprenant au moins deux ensembles de données différents pour au moins une teinte, comprenant chacun le même code d'identification de teinte et des informations sur des formulations de couleur différentes les unes des autres, sur un substrat ainsi que sur une méthode d'application, le substrat et/ou la méthode d'application d'au moins un des au moins deux ensembles de données différents étant différents du substrat et/ou de la méthode d'application d'un autre des au moins deux ensembles de données différents, un produit de couleur de la même teinte étant obtenu pour chacune des formulations de couleur différentes les unes des autres des au moins deux ensembles de données différents après l'application de la formulation de couleur respective avec la méthode d'application stockée dans l'ensemble de données respectif sur le substrat stocké dans l'ensemble de données respectif, et
ii) la base de données pour au moins une formulation de couleur comprenant au moins deux ensembles de données différents, chacun comprenant le même code d'identification de formulation de couleur et des informations sur la même formulation de couleur, sur un substrat, sur une méthode d'application et sur une teinte résultant de la méthode d'application stockée dans l'ensemble de données respectif après l'application de la formulation de couleur stockée dans l'ensemble de données respectif avec la méthode d'application stockée dans l'ensemble de données respectif sur le substrat stocké dans l'ensemble de données respectif pour le produit de couleur, le substrat et/ou la méthode d'application d'au moins un des au moins deux ensembles de données différents étant différents du substrat et/ou de la méthode d'application d'un autre des au moins deux ensembles de données différents, et après l'application de la formulation de couleur respective avec la méthode d'application stockée dans l'ensemble de données respectif sur le substrat stocké dans l'ensemble de données respectif, un produit de couleur d'au moins un des au moins deux ensembles de données différents étant différent de la teinte du produit de couleur d'un autre des au moins deux ensembles de données différents,
**caractérisée en ce que** :
iii) dans au moins 90 % des ensembles de données dans lesquels sont stockées des informations sur une teinte différente de la teinte d'un ou plusieurs autres ensembles de données, un code d'identification de teinte différent de celui d'un ou plusieurs autres ensembles de données est stocké,
iv) dans au moins 90 % des ensembles de données dans lesquels sont stockées des informations sur une formulation de couleur différente de la formulation de couleur d'un ou de plusieurs autres ensembles de données, un code d'identification de formulation de couleur différent de celui d'un ou plusieurs autres ensembles de données est stocké,
iii) dans au moins 90 % des ensembles de données dans lesquels sont stockées des informations sur une teinte égale à la teinte d'un ou plusieurs autres ensembles de données, le même code d'identification de teinte est stocké que dans les un ou plusieurs autres ensembles de données, et
iv) dans au moins 90 % des ensembles de données dans lesquels sont stockées des informations sur une formulation de couleur égale à la formulation de couleur d'un ou de plusieurs autres ensembles de données, le même code d'identification de formulation de couleur est stocké que dans les un ou plusieurs autres ensembles de données,
deux teintes étant évaluées égales dans la base de données si elles diffèrent l'une de l'autre d'une valeur Delta E de 0,5 au maximum, deux teintes étant évaluées différentes si elles diffèrent l'une de l'autre d'une valeur Delta E de plus de 0,5, deux formulations de couleurs étant évaluées égales si elles contiennent les mêmes composants colorants et diffèrent l'une de l'autre de 0,5 % au maximum par composant colorant en ce qui concerne les quantités de composants colorants individuels, et deux formulations de couleurs étant évaluées différentes si elles contiennent au moins un composant colorant différent ou, si elles contiennent les mêmes composants colorants, diffèrent l'une de l'autre de plus de 0,5 % par composant en ce qui concerne les quantités de composants colorants individuels.

13. Système pour déterminer une formulation de couleur qui, après l'application avec une méthode d'application prédéterminée sur un substrat prédéterminé, donne un produit de couleur avec une teinte prédéterminée, pour la mise en oeuvre d'un procédé selon au moins l'une des revendications 1 à 11, le système comprenant :
a) une base de données selon la revendication 12,
b) un programme informatique programmé de manière à permettre à un utilisateur d'entrer dans le programme informatique une méthode d'application cible, un substrat cible ainsi qu'une teinte cible souhaitée résultant de l'application d'une formulation de couleur avec la méthode d'application cible prédéterminée sur le substrat cible prédéterminé pour le produit de couleur obtenu,
c) dans lequel le programme informatique est également programmé pour pouvoir effectuer des recherches dans la base de données afin de déterminer si la base de données contient au moins un ensemble de données dont la formulation de couleur, sur laquelle des informations sont contenues dans l'ensemble de données, donne, après l'application de la méthode d'application cible prédéterminée à l'étape b) sur le substrat cible prédéterminé à l'étape b), un produit de couleur avec une teinte correspondant à la teinte cible prédéterminée à l'étape b) ou qui diffère de celle-ci au maximum avec une tolérance prédéterminée,
d) dans lequel le programme informatique est également programmé pour afficher à l'utilisateur, si au moins un ensemble de données approprié est trouvé à l'étape c), les informations sur la formulation de la couleur stockées dans l'au moins un ensemble de données,
e) dans lequel le programme informatique est également programmé de manière à ce que, lors de la création d'un nouvel ensemble de données dans la base de données par un utilisateur, si au moins un ensemble de données est déjà contenu ou non pour la formulation de couleur sur laquelle des informations doivent être stockées dans le nouvel ensemble de données à créer, le nouvel ensemble de données étant créé, si ce n'est pas le cas, et un code d'identification de formulation de couleur nouvellement attribué étant stocké dans cet ensemble de données, et, si c'est le cas, étant en outre vérifié, si le au moins un ensemble de données contient des informations sur le même substrat, sur la même méthode d'application et sur la même teinte obtenue après l'application de la formulation de couleur sur le substrat avec la méthode d'application, l'utilisateur étant informé, si c'est le cas, qu'un ensemble de données correspondant est déjà contenu dans la base de données et que l'ensemble de données à créer n'est alors pas créé, et, si ce n'est pas le cas, le même code d'identification de formulation de couleur étant stocké dans le nouvel ensemble de données à créer.
